# EUROPEAN PATENT APPLICATION

(11) **EP 4 746 316 A1**
(43) Date of publication of application: **20.05.2026**
(21) Application number: 24850778.2
(22) Date of filing: 22.07.2024
(51) Int. Cl.: H04B 10/40, H04Q 11/00

(54) **SERVICE TRANSMISSION METHOD, AND OPTICAL MODULE AND TRANSMISSION DEVICE**

(30) Priority: 09.08.2023 CN 202311008636
(71) Applicant: Huawei Technologies Co., Ltd., Shenzhen, Guangdong 518129 (CN)
(72) Inventor: ZHANG, Qiang, Shenzhen, Guangdong 518129 (CN); SI, Minggang, Shenzhen, Guangdong 518129 (CN); LI, Jiang, Shenzhen, Guangdong 518129 (CN)
(74) Representative: Maiwald GmbH
(86) International application number: PCT/CN2024/106671
(87) International publication number: WO 2025/031128

(57) **Abstract**

Embodiments of this application disclose a service transmission method, an optical module, and a transmission device, to reduce power consumption of an optical module for processing a service when service types are increased. The method includes: First, an optical module receives an optical signal, where the optical signal carries service data. Second, the optical module converts the optical signal into an electrical signal. Further, the optical module performs digital signal processing on the electrical signal to obtain a service cell or a service packet. Finally, the optical module sends the service cell or the service packet outward.

## Description

This application claims priority to Chinese Patent Application No. 202311008636.6, filed with the China National Intellectual Property Administration on August 9, 2023 and entitled "SERVICE TRANSMISSION METHOD, OPTICAL MODULE, AND TRANSMISSION DEVICE", which is incorporated herein by reference in its entirety.

### TECHNICAL FIELD

Embodiments of this application relate to the field of optical communication technologies, and in particular, to a service transmission method, an optical module, and a transmission device.

### BACKGROUND

An optical transmission device includes an optical module. The optical module has a built-in framer (Framer) chip. The optical module receives an optical signal that carries various services, and encapsulates the optical signal that carries the various services into a transmission frame. For example, the optical module receives an optical signal that carries an Ethernet service, the optical module performs optical-to-electrical conversion on the optical signal that carries the Ethernet service to obtain an electrical signal that carries the Ethernet service, the Framer chip encapsulates the electrical signal that carries the Ethernet service into an Ethernet transmission frame, and the optical module emits the Ethernet transmission frame. For another example, the optical module receives an optical signal that carries an optical transport network (optical transport network, OTN) service, the optical module performs optical-to-electrical conversion on the optical signal that carries the OTN service to obtain an electrical signal that carries the OTN service, the Framer chip encapsulates the electrical signal that carries the OTN service into OTN transmission frames of various rates, and the optical module emits the OTN transmission frame.

It can be learned that a format of a transmission frame emitted by the optical module varies with a type of a service carried by the transmission frame. With continuous growth of fixed network, mobile, and private line services, types of frame formats of transmission frames emitted by the optical module are increased, and consequently, an insertion loss for the transmission frame emitted by the optical module is large. An optical module serving as a receiving side needs to process the transmission frames in the various formats, and as a result, power consumption of the optical module on the receiving side is increased.

### SUMMARY

Embodiments of this application provide a service transmission method, an optical module, and a transmission device, to reduce power consumption of an optical module for processing a service when service types are increased.

According to a first aspect, an embodiment of this application provides a service transmission method. The method includes: First, an optical module receives an optical signal, where the optical signal carries service data. Second, the optical module converts the optical signal into an electrical signal. Further, the optical module performs digital signal processing on the electrical signal to obtain a service cell or a service packet. The optical module can convert, based on a digital signal processing manner, various types of services, such as a synchronous digital hierarchy service, a packet service, an Ethernet service, a flexible Ethernet network, a fronthaul service, an optical transport network service, a storage service, a data center service, or a supercomputing service, into a service cell or a service packet in a uniform format. Finally, the optical module sends the service cell or the service packet outward.

As shown in this aspect, even if types of services received by the optical module are increased with continuous growth of fixed network, mobile, and private line services, the optical module can convert different services into a service cell or a service packet in a uniform format. In this case, another optical module serving as a receiving side directly receives the service cell or the service packet, and because of the unified format of the service cell or the service packet, power consumption of the another optical module for processing the service cell or the service packet is reduced. In addition, because various types of services are transmitted through the service cell or the service packet, successful transmission of the service is ensured, thereby improving reliability of service transmission.

Based on the first aspect, in an optional implementation, that the optical module performs digital signal processing on the electrical signal to obtain the service cell or the service packet includes: The optical module converts the electrical signal into a digital signal; the optical module demaps the digital signal to obtain a demapped signal; and the optical module slices the demapped signal to obtain the service cell or the service packet.

In this implementation, the optical module can convert, based on digital signal processing, various types of services into a service cell or a service packet in a uniform format, thereby reducing power consumption of the optical module in processing the service cell or the service packet, and improving service transmission reliability.

Based on the first aspect, in an optional implementation, that the optical module slices the demapped signal to obtain the service cell or the service packet includes: The optical module slices the demapped signal based on a quantity of bytes or a quantity of bits to obtain a plurality of service cells.

In this implementation, various types of services can be sliced based on a quantity of bytes or a quantity of bits, thereby improving service switching efficiency and service transmission reliability.

Based on the first aspect, in an optional implementation, the demapped signal includes a plurality of subframes, and that the optical module slices the demapped signal to obtain the service cell or the service packet includes: The optical module slices the demapped signal based on a length of the subframe to obtain the service packet, where the service packet includes at least one of the subframes.

In this implementation, each service packet includes at least one complete subframe, so that a packet loss rate of service transmission is effectively reduced, and reliability of service transmission is improved.

Based on the first aspect, in an optional implementation, after the optical module slices the demapped signal to obtain the service cell or the service packet, the method further includes: The optical module adds an overhead to the service cell or the service packet, where the overhead carries at least one of the following: information indicating a target port, operation and maintenance information, switching information, or timing information, where the switching information indicates a switching manner of the service cell or the service packet, and the timing information indicates a timing for sending the service cell or the service packet.

In this implementation, the overhead added to the service cell or the service packet can ensure successful service switching, thereby improving reliability of service transmission.

Based on the first aspect, in an optional implementation, that the optical module sends the service cell or the service packet outward includes: The optical module sends the service cell or the service packet to a switching chip through a first transmission medium.

In this implementation, the optical module is directly connected to the switching chip through the first transmission medium, the optical module can send the service cell or the service packet to the switching chip through the first transmission medium, and the switching chip successfully switches the service cell or the service packet to a corresponding target port.

Based on the first aspect, in an optional implementation, that the optical module sends the service cell or the service packet outward includes: The optical module sends the service cell or the service packet to another optical module through a second transmission medium.

In this implementation, the optical module is directly connected to another optical module through the second transmission medium, thereby improving reliability of transmission of the service cell or the service packet, and reducing a transmission delay of the service cell or service packet.

Based on the first aspect, in an optional implementation, that the optical module sends the service cell or the service packet outward includes: The optical module converts the service cell or the service packet into a transmitted optical signal; and the optical module sends the transmitted optical signal outward through a first transmission medium or a second transmission medium, where the first transmission medium is configured to connect the optical module and a switching chip, and the second transmission medium is configured to connect the optical module and another optical module.

In this implementation, the optical module converts the service cell or the service packet into the transmitted optical signal, and transmits the service cell or the service packet by transmitting the optical signal, thereby reducing a transmission delay of the service cell or the service packet.

Based on the first aspect, in an optional implementation, the optical module is a direct detection optical module, and after that the optical module demaps the digital signal to obtain the demapped signal, the method further includes: The optical module performs forward error correction FEC decoding on the demapped signal to obtain a first decoded signal; and that the optical module slices the demapped signal to obtain the service cell or the service packet includes: The optical module slices the first decoded signal to obtain the service cell or the service packet.

In this implementation, an input optical fiber of the optical module is configured to receive an optical signal that carries service data. FEC decoding of the optical module can improve reliability of transmission of the optical signal, reduce a bit error rate of the optical signal, and effectively suppress intersymbol interference on a transmission path of the optical signal.

Based on the first aspect, in an optional implementation, the optical module is a direct detection optical module or a coherent optical module, and after that the optical module demaps the digital signal to obtain the demapped signal, the method further includes: The optical module performs FEC decoding on the demapped signal to obtain a first decoded signal; that the optical module slices the demapped signal to obtain the service cell or the service packet includes: The optical module slices the first decoded signal to obtain the service cell or the service packet; after the optical module slices the demapped signal to obtain the service cell or the service packet, the method further includes: The optical module performs FEC encoding on the service cell or the service packet to obtain a first encoded signal; and that the optical module sends the service cell or the service packet outward includes: The optical module sends the first encoded signal outward.

In this implementation, the input optical fiber of the optical module is configured to receive an optical signal that carries service data. FEC decoding of the optical module can improve reliability of transmission of the optical signal, reduce a bit error rate of the optical signal, and effectively suppress intersymbol interference on a transmission path of the optical signal. FEC encoding of the optical module can improve reliability of transmission of the service cell or the service packet sent by the optical module outward, and reduce a bit error rate of the service cell or the service packet.

Based on the first aspect, in an optional implementation, that the optical module performs digital signal processing on the electrical signal to obtain the service cell or the service packet includes: The optical module performs digital signal processing on the electrical signal to convert the electrical signal into N first transmission data streams, where each first transmission data stream includes the service cell or the service packet, and N is any integer not less than 1; and the optical module performs redundancy protection on the N first transmission data streams to convert the N first transmission data streams into M second transmission data streams, where M is any integer greater than N; and that the optical module sends the service cell or the service packet outward includes: The optical module sends the M second transmission data streams outward.

In this implementation, the optical module converts the N first transmission data streams into the M second transmission data streams, thereby implementing redundancy protection for service data transmission and improving service transmission reliability.

According to a second aspect, an embodiment of this application provides a service transmission method, where the method includes: An optical module receives a service cell or a service packet, where the service cell or the service packet is used to carry service data; the optical module performs digital signal processing on the service cell or the service packet to obtain an electrical signal; the optical module converts the electrical signal into an optical signal; and the optical module sends the optical signal outward.

For descriptions of beneficial effects of this aspect, refer to the first aspect. Details are not described again.

Based on the second aspect, in an optional implementation, that the optical module performs digital signal processing on the service cell or the service packet to obtain the electrical signal includes: The optical module combines the service cell or the service packet into a service stream based on a timing at which the service cell or the service packet is sent; the optical module maps the service stream to obtain a mapped signal; and the optical module converts the mapped signal into the electrical signal, where the electrical signal is an analog signal.

Based on the second aspect, in an optional implementation, the service cell or the service packet includes an overhead, and the overhead carries at least one of the following: information indicating a target port, operation and maintenance information, switching information, or timing information, where the switching information indicates a switching manner of the service cell or the service packet, and the timing information indicates a timing for sending the service cell or the service packet.

Based on the second aspect, in an optional implementation, that the optical module receives the service cell or the service packet includes: The optical module receives the service cell or the service packet through a first transmission medium.

Based on the second aspect, in an optional implementation, that the optical module receives the service cell or the service packet includes: The optical module receives the service cell or the service packet through a second transmission medium.

Based on the second aspect, in an optional implementation, that the optical module receives the service cell or the service packet includes: The optical module receives a transmitted optical signal through a first transmission medium or a second transmission medium, where the second transmission medium is configured to connect the optical module and another optical module, and the first transmission medium is configured to connect the optical module and a switching chip; and the optical module converts the transmitted optical signal into the service cell or the service packet.

Based on the second aspect, in an optional implementation, the optical module is a direct detection optical module, and after that the optical module combines the service cell or the service packet into the service stream based on the timing at which the service cell or the service packet is sent, the method further includes: The optical module performs forward error correction FEC encoding on the service stream to obtain a second encoded signal; and that the optical module maps the service stream to obtain the mapped signal includes: The optical module maps the second encoded signal to obtain the mapped signal.

Based on the second aspect, in an optional implementation, the optical module is a direct detection optical module or a coherent optical module, and that the optical module combines the service cell or the service packet into the service stream based on the timing at which the service cell or the service packet is sent includes: The optical module performs FEC decoding on the service cell or the service packet to obtain a second decoded signal; and the optical module combines the second decoded signal into the service stream based on the timing at which the service cell or the service packet is sent.

Based on the second aspect, in an optional implementation, that the optical module receives the service cell or the service packet includes: The optical module receives Q second transmission data streams, where each second transmission data stream includes the service cell or the service packet, and Q is any integer not less than 1; and the optical module performs redundancy protection on the Q second transmission data streams to obtain N first transmission data streams, where N is any integer not less than 1, and Q is not less than N.

According to a third aspect, an embodiment of this application provides an optical module, where the optical module includes a photoelectric converter and a processor that are sequentially connected; the photoelectric converter is configured to: receive an optical signal, and convert the optical signal into an electrical signal, where the optical signal carries service data; and the processor is configured to: perform digital signal processing on the electrical signal to obtain a service cell or a service packet, and send the service cell or the service packet outward.

The optical module shown in this aspect is configured to perform the method shown in the first aspect. For descriptions of a specific execution process and beneficial effects, refer to the first aspect. Details are not described again.

Based on the third aspect, in an optional implementation, the processor includes a digital signal processor and a fabric interface controller FIC; the digital signal processor is configured to: convert the electrical signal into a digital signal, and demap the digital signal to obtain a demapped signal; and the FIC is configured to slice the demapped signal to obtain the service cell or the service packet.

According to a fourth aspect, an embodiment of this application provides an optical module, where the optical module includes a photoelectric converter and a processor that are sequentially connected; the photoelectric converter is configured to: receive a service cell or a service packet, where the service cell or the service packet is used to carry service data; the processor is configured to perform digital signal processing on the service cell or the service packet to obtain an electrical signal; and the photoelectric converter is further configured to: convert the electrical signal into an optical signal, and send the optical signal outward.

The optical module shown in this aspect is configured to perform the method shown in the second aspect. For descriptions of a specific execution process and beneficial effects, refer to the second aspect. Details are not described again.

According to a fifth aspect, this application provides a transmission device. The transmission device includes a device board and an optical module connected to the device board. The optical module is described in the third aspect.

Based on the fifth aspect, in an optional implementation, a processor includes a control interface, the control interface is connected to the device board, and the control interface is configured to receive control signaling from the device board.

According to a sixth aspect, this application provides a transmission device. The transmission device includes a device board and an optical module connected to the device board. The optical module is described in the fourth aspect.

Based on the sixth aspect, in an optional implementation, a processor includes a control interface, the control interface is connected to the device board, and the control interface is configured to receive control signaling from the device board.

According to a seventh aspect, an embodiment of this application provides a switching device, where the switching device includes a first optical module and a second optical module; the first optical module is configured to: receive an optical signal, where the optical signal carries service data; convert the optical signal into an electrical signal; perform digital signal processing on the electrical signal to obtain a service cell or a service packet; and send the service cell or the service packet to the second optical module; and the second optical module is configured to: receive the service cell or the service packet, perform digital signal processing on the service cell or the service packet to obtain an electrical signal, convert the electrical signal into an optical signal, and send the optical signal outward.

The switching device shown in this aspect is configured to perform the method according to any one of the first aspect or the second aspect. For descriptions of a specific execution process and beneficial effects, refer to the descriptions of any one of the first aspect or the second aspect.

Based on the seventh aspect, in an optional implementation, the first optical module includes M interfaces, M is any integer not less than 2, the M interfaces include a first interface and a second interface, the first interface is connected to a first switching chip, the second interface is connected to a second switching chip, and the first switching chip is different from the second switching chip; the first optical module is configured to send a first service stream to the first switching chip through the first interface, where the first switching chip is configured to send the first service stream to the second optical module; and the first optical module is configured to send a second service stream to the second switching chip through the second interface, where the second switching chip is configured to send the second service stream to the second optical module, and the first service stream and the second service stream are respectively used to carry the service cell or the service packet. Each first interface may be an electrical interface or an optical interface.

According to an eighth aspect, an embodiment of this application provides a computer-readable storage medium, where the computer-readable storage medium stores computer instructions, and when the computer instructions are runs on a computer, the computer performs the method according to the first aspect or the second aspect.

According to a ninth aspect, an embodiment of this application provides a chip, including a processor. The processor is configured to: read and execute a computer program stored in a memory, to perform the method according to any one of the first aspect or the second aspect. Optionally, the chip further includes a memory, and the memory and the processor are connected to the memory through a circuit or an electric wire. Optionally, the chip further includes a control interface or a clock interface.

According to a tenth aspect, an embodiment of this application provides an optical module, including a first photoelectric converter and a processor that are sequentially connected, where the processor includes a first digital/analog conversion interface, the first digital/analog conversion interface is connected to the first photoelectric converter, and the processor includes a medium-reach MR interface or a long-reach LR interface; the first photoelectric converter is configured to: receive an optical signal and convert the optical signal into an electrical signal; the first digital/analog conversion interface is configured to convert the electrical signal into a digital signal; and the processor is configured to: process the digital signal, and send a processed signal outward through the MR interface or the LR interface.

According to the structure of the optical module shown in this aspect, because the first optical module directly sends, through the MR interface or the LR interface, the signal on which digital signal processing is performed by the processor, transmission through the MR interface or the LR interface effectively reduces an insertion loss for transmitting the signal on which digital signal processing is performed.

The optical module shown in this aspect may be configured to perform the method according to any one of the first aspect or the second aspect. For descriptions of a specific execution process and beneficial effects, refer to the first aspect. Details are not described again.

Based on the tenth aspect, in an optional implementation, the processor includes a digital signal processor and a framer, the digital signal processor is connected to the framer through an extra-short-reach XSR interface or a very-short-reach VSR interface, and the framer includes the MR interface or the LR interface.

According to the structure of the optical module in this implementation, the digital signal processor and the framer are connected through the XSR interface or the VSR interface. In this case, the digital signal processor and the framer do not need to be connected through a connector of a circuit board, thereby effectively reducing a length (for example, a centimeter level) of an electrical connection path between the digital signal processor and the framer, and effectively reducing an insertion loss for a signal transmitted between the digital signal processor and the framer.

Based on the tenth aspect, in an optional implementation, the optical module includes a circuit board, and the digital signal processor and the framer are independently installed on the circuit board.

According to the structure of the optical module in this implementation, the digital signal processor and the framer exchange a signal through the circuit board. Because the first optical module directly sends, through the MR interface or the LR interface, the signal on which digital signal processing is performed by the processor, transmission through the MR interface or the LR interface effectively reduces an insertion loss for transmitting the signal on which digital signal processing is performed.

Based on the tenth aspect, in an optional implementation, the processor includes a digital signal processor and a framer, and the digital signal processor is connected to the framer through a core-chip interconnection interface.

According to the structure of the optical module shown in this aspect, the digital signal processor and the framer are connected through the chiplet interconnect interface. In this way, the chiplet interconnect interface effectively reduces a length (for example, a micrometer level or a millimeter level) of an electrical connection path between the digital signal processor and the framer, thereby effectively reducing an insertion loss for a signal transmitted between the digital signal processor and the framer.

Based on the tenth aspect, in an optional implementation, the digital signal processor and the framer are installed as a whole on a circuit board of the optical module.

According to the structure of the optical module shown in this aspect, because the digital signal processor and the framer are installed as a whole on the circuit board of the optical module, a length of an electrical connection path between the digital signal processor and the framer is effectively reduced, and an insertion loss for a signal transmitted between the digital signal processor and the framer is effectively reduced.

Based on the tenth aspect, in an optional implementation, the processor integrates a digital signal processor and a framer, the processor includes a clock interface and/or a control interface, the control interface is configured to receive control signaling, and the clock interface is configured to receive a clock synchronization signal.

According to the structure of the optical module shown in this implementation, because the integrated processing module integrates a function of the digital signal processor and a function of the framer, information exchange between the digital signal processor and the framer is implemented through a trace connection inside the processor instead of a physical interface, thereby effectively reducing a bit error rate of signal transmission by the integrated processing module.

Based on the tenth aspect, in an optional implementation, the MR interface or the LR interface is connected to a transmission medium, and the transmission medium is configured to connect to a switching chip or another optical module.

Based on the tenth aspect, in an optional implementation, the processor further includes a second digital/analog conversion interface, the optical module further includes a second photoelectric converter, the second photoelectric converter is connected to the MR interface or the LR interface, and the second digital/analog conversion interface is connected to the second photoelectric converter; and the second digital/analog conversion interface is configured to convert the processed signal into an analog signal, and the second photoelectric converter is configured to: convert the analog signal into another optical signal and send the another optical signal outward.

According to the optical module structure shown in this implementation, the optical module can send, through the optical signal, the signal processed by the digital signal, and can further receive, through the optical signal, the signal processed by the digital signal, thereby reducing a signal transmission delay and improving reliability.

According to an eleventh aspect, an embodiment of this application provides a switching device, including a backplane, an optical module installed on the backplane, and a switching chip, where the optical module is as described in any one of the tenth aspect, and the MR interface or the LR interface of the optical module is connected to the switching chip through the backplane.

Based on the eleventh aspect, in an optional implementation, the optical module is installed on the backplane through a first device board, the switching chip is installed on the backplane through a second device board, and the first device board and the second device board are connected through the backplane.

### BRIEF DESCRIPTION OF DRAWINGS

FIG. 1a is an example diagram of a structure of an embodiment of an optical network;
FIG. 1b is an example diagram of a structure of a switching device shown in FIG. la;
FIG. 2 is a flowchart of steps of a first embodiment of a service transmission method according to this application;
FIG. 3 is an example diagram of a structure of a first optical module shown in FIG. 1b;
FIG. 4a is an example diagram of a first type of slicing according to this application;
FIG. 4b is an example diagram of a second type of slicing according to this application;
FIG. 5 is another example diagram of a structure of the switching device shown in FIG. la;
FIG. 6 is another example diagram of a structure of the switching device shown in FIG. la;
FIG. 7 is an example diagram of a structure of a second optical module shown in FIG. 1b;
FIG. 8 is an example diagram of a structure of an embodiment of a switching device according to this application;
FIG. 9 is a flowchart of steps of a second embodiment of a service transmission method according to this application;
FIG. 10 is an example diagram of a structure of another embodiment of a switching device according to this application;
FIG. 11 is a flowchart of steps of a third embodiment of a service transmission method according to this application;
FIG. 12 is an example diagram of a third type of slicing according to this application;
FIG. 13a is an example diagram of a structure of an embodiment of a first optical module shown in FIG. 10;
FIG. 13b is an example diagram of a structure of another embodiment of the first optical module shown in FIG. 10;
FIG. 14 is an example diagram of a structure of an embodiment of a second optical module shown in FIG. 10;
FIG. 15 is an example diagram of a structure of another embodiment of the second optical module shown in FIG. 10;
FIG. 16 is a flowchart of steps of a fourth embodiment of a service transmission method according to this application;
FIG. 17 is an example diagram of a structure of an embodiment of a coherent optical module according to this application;
FIG. 18 is an example diagram of a structure of another embodiment of a coherent optical module according to this application;
FIG. 19 is an example diagram of a structure of a first embodiment of an optical module according to this application;
FIG. 20 is an example diagram of a structure of a second embodiment of an optical module according to this application;
FIG. 21 is an example diagram of a structure of a third embodiment of an optical module according to this application;
FIG. 22 is an example diagram of a structure of a fourth embodiment of an optical module according to this application;
FIG. 23 is an example diagram of a structure of a fifth embodiment of an optical module according to this application; and
FIG. 24 is an example diagram of a structure of another embodiment of a switching device according to this application.

### DESCRIPTION OF EMBODIMENTS

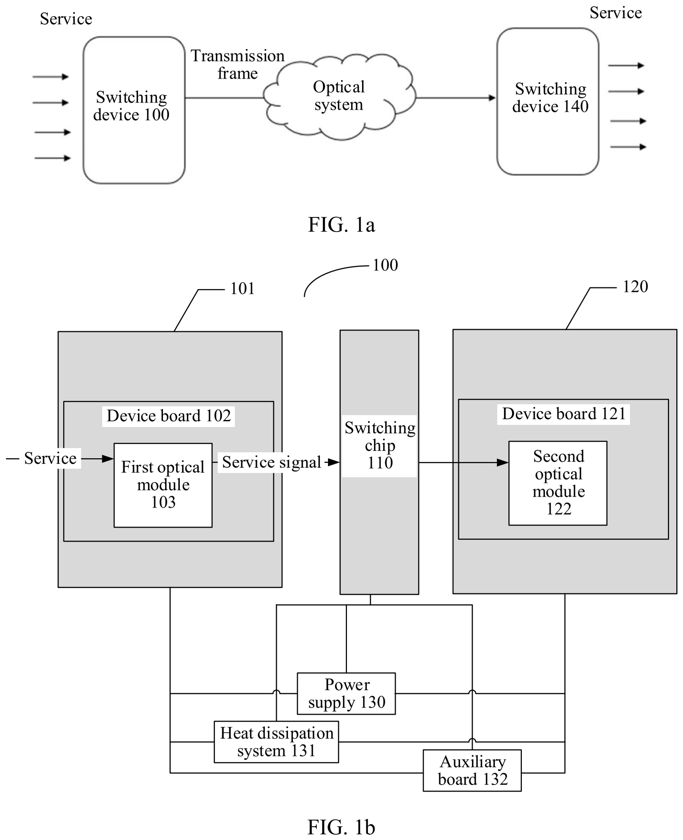

Embodiments of this application provide a service transmission method, an optical module, and a transmission device, to reduce power consumption of the optical module for processing various services. FIG. 1a is an example diagram of a structure of an embodiment of an optical network. The optical network includes a switching device 100 configured to receive various services. The switching device 100 aggregates various services into a transmission frame, and remotely transmits the transmission frame to a switching device 140 through an optical system. The switching device 140 parses the transmission frame to obtain various services, and sends the various services to a user side device (for example, a computer, a telephone, or a television).

FIG. 1b is an example diagram of a structure of the switching device shown in FIG. 1a. The switching device 100 is used as an example. The switching device 100 includes a first transmission device 101, a switching chip 110, and a second transmission device 120. The first transmission device 101 may also be referred to as a tributary board, the second transmission device 120 may also be referred to as a line board, and the switching chip 110 may also be referred to as a cross-connect board or a switching board. The first transmission device 101 includes a device board 102 and a first optical module 103 connected to the device board 102. In this example, a detachable connection between the first optical module 103 and the device board 102 is used. In another example, the first optical module 103 is integrated with the device board 102, to implement a nondetachable connection. The second transmission device 120 includes a device board 121 and a second optical module 122. For descriptions of the second transmission device 120, refer to the descriptions of the first transmission device 101. Details are not described again. It should be noted that, according to a specific requirement, types and a quantity of boards included in the switching device 100 may vary. The switching device 100 may further include a power supply 130, a heat dissipation system 131, and an auxiliary board 132. The power supply 130 is configured to supply power to the switching device 100, and may include an active power supply and a standby power supply. The heat dissipation system 131 is configured to dissipate heat for the switching device 100. The auxiliary board 132 is configured to provide an auxiliary function, for example, provide an external alarm or access an external clock. A device type of the first transmission device 101 may be an optical transmission device, an optical access device, a router, a switch, a wireless base station, a wireless remote access device, a wireless baseband signal processing device, or the like, or may be a computing server (usually referred to as a server for short), a high performance computer (high performance computer, HPC), a storage server, or a memory resource pool. The type of the first transmission device 101 is not limited in this example, provided that the first transmission device 101 has an electrical/optical conversion function, an optical interface that can be connected to an optical fiber, and an electrical interface that can be connected to the switching chip 110.

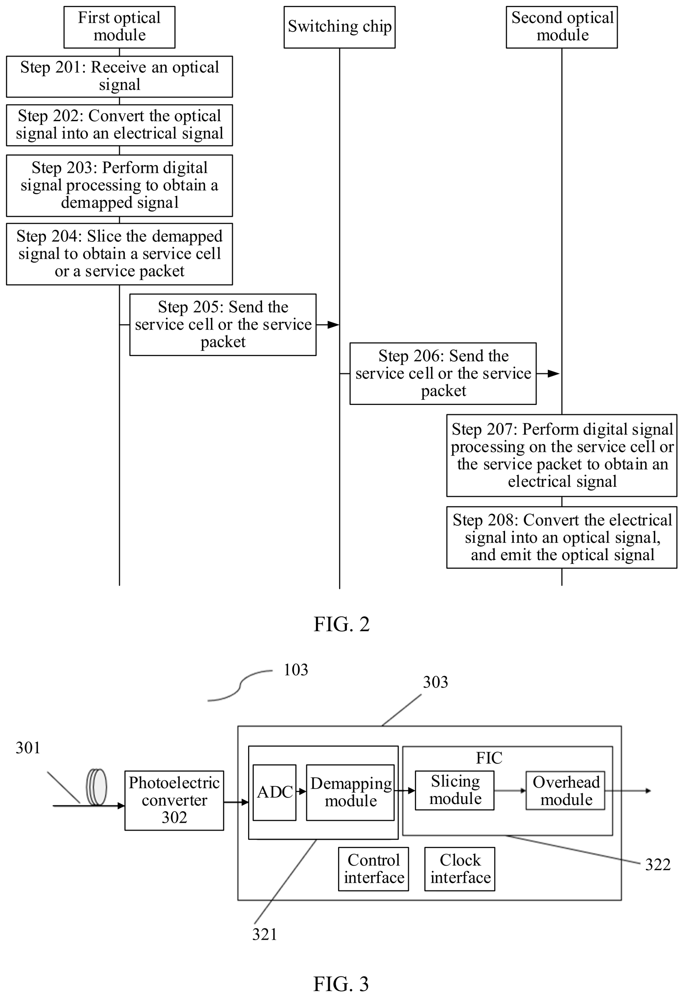

Based on FIG. 1a and FIG. 1b, an execution process of a service transmission method according to this application is described with reference to FIG. 2. FIG. 2 is a flowchart of steps of a first embodiment of the service transmission method according to this application.

Step 201: A first optical module receives an optical signal.

With reference to FIG. 1b and FIG. 3, the method shown in this embodiment is specifically described. FIG. 3 is an example diagram of a structure of the first optical module shown in FIG. 1b. The first optical module 103 includes an input optical fiber 301, the input optical fiber 301 is configured to receive the optical signal, and the optical signal carries service data. The service data shown in this embodiment may carry various types of services, for example, a synchronous digital hierarchy (synchronous digital hierarchy, SDH) service, a packet service, an Ethernet (ethernet) service, a flexible Ethernet (flexible ethernet, FlexE) service, a fronthaul service, an optical transport network (optical transport network, OTN) service, a storage service, a data center service, or a supercomputing service. A quantity and specific types of services carried in a service signal are not limited in this embodiment. If a type of a service carried in the optical signal is an OTN service, a data frame included in the optical signal is an OTN frame. The OTN frame may be an optical data unit (ODUk), an ODUCn, an ODU flex (flex), an optical channel transport unit (optical transport unit k, OTUk), an OTUCn, an OTN Flex, or the like. A difference between an ODU frame and the OTU frame lies in that the OTU frame includes an ODU frame and an OTU overhead, k represents different rate levels, and Cn represents a variable rate. The OTN frame may alternatively be an optical service unit (optical service unit, OSU) frame. The OSU is merely an example, and should not constitute a limitation on a frame structure defined in this application. The name may alternatively be replaced with another name like a low rate frame, a low rate service frame, or an optical service data unit frame. With development of an OTN technology, a new type of OTN frame may be defined, which is also applicable to this application. For another example, the data frame may alternatively be an optical transport unit (OTUk). For another example, the data frame may alternatively be a signal, for example, an optical payload unit (OPUk). If the type of the service carried in the optical signal is an Ethernet service, the data frame may be an Ethernet data frame.

The optical signal received by the first optical module in this embodiment includes data frames of various types and rates. For example, the optical signal shown in this embodiment includes an ODU 1, an ODU 2, an Ethernet data frame, and the like.

Step 202: The first optical module converts the optical signal into an electrical signal.

In FIG. 3, the input optical fiber 301 of the first optical module 103 is connected to a photoelectric converter 302, and the photoelectric converter 302 is configured to perform optical/electrical conversion (demodulation) on the optical signal to output an electrical signal. The photoelectric converter 302 may be a photodiode (positive intrinsic-negative, PIN), an avalanche photo diode (avalanche photo diode, APD), or the like. This is not specifically limited.

Step 203: The first optical module performs digital signal processing on the electrical signal to obtain a demapped signal.

The first optical module 103 shown in FIG. 3 includes a processor 303 connected to the photoelectric converter 302. The processor 303 may be one or more chips or one or more integrated circuits. For another example, the processor 303 may be one or more optical digital signal processors (optical digital signal processor, oDSP), field programmable gate arrays (field programmable gate arrays, FPGA), application-specific integrated chips (application-specific integrated circuit, ASIC), system on chips (system on chip, SoC), central processing units (central processor unit, CPU), network processors (network processor, NP), microprocessors (microcontroller unit, MCU), programmable processors (programmable logic device, PLD), network interface card chips, storage interface chips, or other integrated chips, or any combination of the foregoing chips or processors. Details are not described.

Specifically, the processor 303 includes a digital signal processor 321, and the digital signal processor 321 may specifically include an analog-to-digital converter (analog to digital converter, ADC) and a demapping module. The ADC performs analog/digital conversion on the electrical signal from the photoelectric converter 302 to obtain a digital signal. The demapping module of the digital signal processor 321 demaps the digital signal to obtain the demapped signal. In this embodiment, an example in which the demapping module, in cooperation with hard decision forward error correction (forward error correction, FEC), performs constellation demapping on the digital signal is used. The constellation demapping refers to demapping a constellation diagram to obtain the demapped signal. The constellation diagram includes a constellation point, for example, a constellation point 1+j in a QPSK constellation diagram. The demapping module demaps the constellation point 1+j to obtain a bit "01". It may be understood that a demapped signal obtained by the demapping module by demapping each constellation point included in the constellation diagram is a binary bit sequence, for example, "0101001010101010...", and the demapped signal carries service data. It should be clarified that the descriptions of processing of the digital signal processor 321 in this embodiment are an optional example, and are not limited. For example, the digital signal processor 321 may further perform clock recovery, channel compensation, multiple-input multiple-output (multiple-in multiple-out, MIMO) equalization, carrier phase recovery, dispersion estimation, and the like.

Step 204: The first optical module slices the demapped signal to obtain a service cell or a service packet.

In FIG. 3, the processor 303 further includes a fabric interface controller (fabric interface controller, FIC) 322 connected to the digital signal processor 321. The FIC 322 is configured to slice the demapped signal to obtain the service cell (cell) or the service packet (packet). In this embodiment, an example in which the processor 303 includes the FIC 322 is used. In another example, in the first optical module 103, the FIC is used as an independent chip, and is disposed separately from the processor 303. This is not specifically limited. Specifically, the FIC 322 includes a slicing module and an overhead module. The slicing module receives the demapped signal from the demapping module, and slices the demapped signal to obtain the service cell or the service packet.

Example 1: This example describes a process in which the FIC slices the demapped signal to obtain a plurality of service cells.

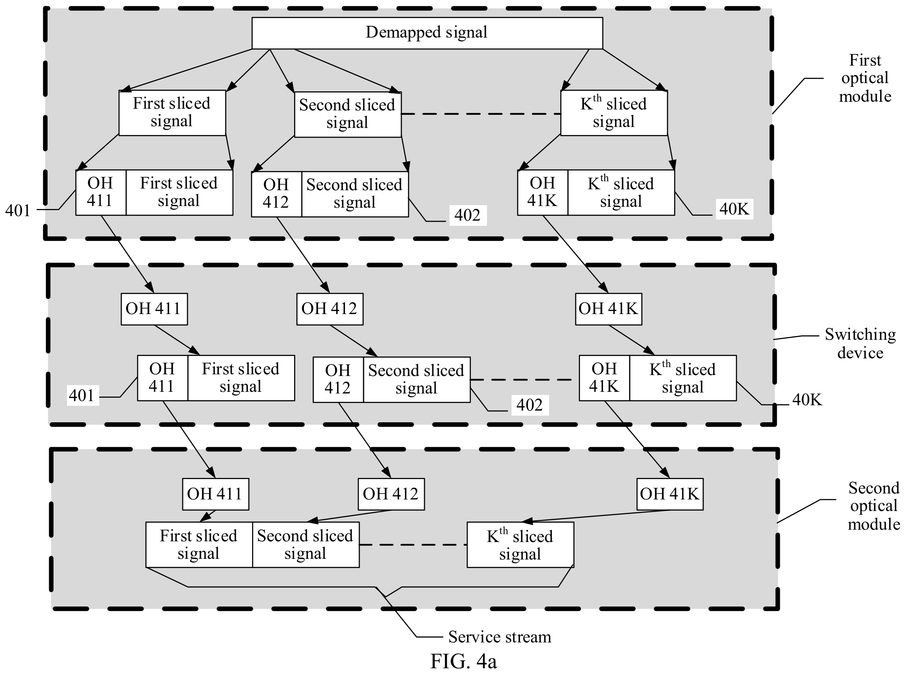

Refer to FIG. 4a. FIG. 4a is a diagram of a first type of slicing according to this application. After receiving the demapped signal from the demapping module, the slicing module slices the signal into K sliced signals based on a quantity of bytes or a quantity of bits, where a value of K is any integer greater than 1, and each sliced signal includes R bytes or R bits. In this embodiment, an example in which each slice includes R bytes is used. The slicing module uses a 1^{st} byte to an R^{th} byte of the demapped signal as a first sliced signal, the slicing module uses an (R+1)^{th} byte to a (2R)^{th} byte of the demapped signal as a second sliced signal, and by analogy, the slicing module obtains a K^{th} sliced signal. In this embodiment, an example in which different sliced signals include a same quantity of bytes is used. Optionally, different sliced signals may alternatively include different quantities of bytes, and specifically, slicing may be performed according to a requirement. The overhead module adds an overhead (OH) to each sliced signal to obtain a service cell. As shown in FIG. 4a, the overhead module obtains a service cell 401, where the service cell 401 includes an OH 411 and the first sliced signal; the overhead module obtains a service cell 402, where the service cell 402 includes an OH 412 and the second sliced signal; and by analogy, the overhead module obtains a service cell 40K, where the service cell 40K includes an OH 41K and the K^{th} sliced signal. The service cell 401 is used as an example. The OH 411 included in the service cell 401 carries at least one of the following:
information indicating a target port, operation and maintenance information, switching information, or timing information. The target port refers to a port used to receive the service cell 401. For example, the information about the target port may be a target port number or a media access control address (media access control address, MAC) of a device receiving the service cell 401. The operation and maintenance information may be used for cyclic redundancy check (cyclic redundancy check, CRC), and the like. The switching information indicates a switching manner of the service cell 401, and the switching manner may be unicast (unicast) or multicast (multicast). The timing information indicates a timing for sending the service cell 401. For example, in the K service cells, the first optical module first sends the service cell 401, and by analogy, finally sends the service cell 40K. In this case, the timing information carried in the OH 411 of the service cell 401 indicates a moment of sending the service cell 401, and timing information carried in the OH 41K of the service cell 40K indicates a moment of sending the service cell 40K. Content carried in the timing information is not limited in this embodiment. For example, the timing information carried in the OH indicates a sequence of each service cell in the K service cells. Information carried by the OH is not limited in this embodiment. For example, the OH may further carry information indicating an output electrical interface, where the first optical module outputs the service cell 401 through the output electrical interface.

Example 2: This example describes a process in which the FIC slices the demapped signal to obtain a plurality of service packets.

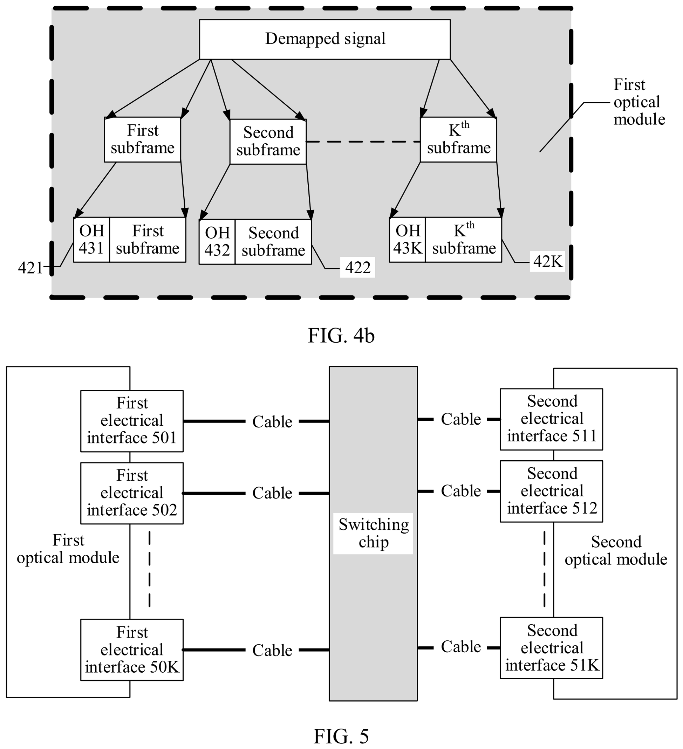

The demapped signal shown in this embodiment may include a plurality of subframes. For example, if the demapped signal is used to carry an Ethernet service, a type of each subframe included in the demapped signal may be an Ethernet data frame. For another example, if the demapped signal is used to carry an OTN service, a type of each subframe included in the demapped signal may be an OTN frame. In this example, an example in which each subframe included in the demapped signal is the Ethernet data frame is used. Refer to FIG. 4b. FIG. 4b is an example diagram of a second type of slicing according to this application. After receiving the demapped signal from the demapping module, the slicing module performs slicing based on a length of each subframe to obtain K sliced signals, where a value of K is any integer greater than 1. For example, if the demapped signal includes K subframes (for example, K Ethernet data frames), the slicing module performs slicing to obtain each subframe, and each obtained service packet includes one subframe. It may be understood that each service packet shown in this embodiment includes one complete subframe. In this embodiment, an example in which each service packet includes one subframe is used. In another example, each service packet may include two or more complete subframes. For example, the slicing module slices the demapped signal to obtain a complete first subframe, a complete second subframe, and so on up to a complete K^{th} subframe. The overhead module adds an OH to each subframe to obtain a service packet. The overhead module obtains a service packet 421, where the service packet 421 includes an OH 431 and the first subframe; the overhead module obtains a service packet 422, where the service packet 422 includes an OH 432 and the second subframe; and by analogy, the overhead module obtains a service packet 42K, where the service packet 42K includes an OH 43K and the K^{th} subframe. For descriptions of the OH carried in each service packet, refer to the descriptions of the OH in the foregoing Example 1. Details are not described again. In this example, each service packet includes at least one complete subframe, so that a packet loss rate of service transmission is effectively reduced, and reliability of service transmission is improved.

In FIG. 3, the processor 303 of the first optical module further includes a control interface. Specifically, the digital signal processor includes the control interface, or the FIC includes the control interface. This is not specifically limited. The control interface is connected to a device board. The control interface is configured to receive control signaling from the device board. For example, the control signaling indicates the digital signal processor to perform a process of digital signal processing. For another example, the control signaling indicates the FIC to perform a process of slicing processing. Descriptions of the control signaling are not limited in this embodiment, provided that the first optical module performs, based on the control instruction, the service transmission process shown in this embodiment. The processor 303 may further include a clock interface. For descriptions of a location of the clock interface, refer to the descriptions of a location of the control interface. Details are not described again. The first optical module receives clock information from the device board based on the clock interface, to implement clock synchronization.

Step 205: The first optical module sends the service cell or the service packet to a switching chip.

Step 206: The switching chip sends the service cell or the service packet to a second optical module.

FIG. 5 is another example diagram of a structure of the switching device shown in FIG. 1a. The first optical module in this embodiment includes a first electrical interface, and the first electrical interface is connected to the first transmission medium. The first optical module is connected to the switching chip through the first transmission medium. The first transmission medium may be a cable, a trace of a circuit board, or an electrical connector. In this embodiment, an example in which the first transmission medium is the cable is used. For example, the first optical module includes K first electrical interfaces, namely, a first electrical interface 501, a first electrical interface 502, and so on, and a first electrical interface 50K. It should be clarified that a quantity of first electrical interfaces included in the first optical module is not limited in this embodiment. Each first electrical interface included in the first optical module is connected to the switching chip through the cable. In this embodiment, the first electrical interface 501 sends a service cell 401 to the switching chip through the cable, the first electrical interface 502 sends a service cell 402 to the switching chip through the cable, and by analogy, the first electrical interface 50K sends a service cell 40K to the switching chip through the cable. In this embodiment, an example in which each first electrical interface of the first optical module sends one service cell is used. In another example, each first electrical interface of the first optical module may send more than one service cell. This is not specifically limited.

Still refer to 4a. After receiving each service cell, the switching chip extracts an OH from the service cell, and determines, based on the OH, a target port used to receive the service cell. For example, the switching chip obtains information about a target port based on an OH 411 (in this example, the information about the target port indicates a second electrical interface 511 of the second optical module). In this case, the switching chip sends the service cell 401 to the second electrical interface 511 of the second optical module based on the OH 411. The switching chip obtains information about a target port based on an OH 412 (in this example, the information about the target port indicates a second electrical interface 512 of the second optical module). In this case, the switching chip sends the service cell 402 to the second electrical interface 512 of the second optical module based on the OH 412. By analogy, the switching chip obtains information about a target port based on an OH 41K (in this example, the information about the target port indicates a second electrical interface 51K of the second optical module). In this case, the switching chip sends the service cell 40K to the second electrical interface 51K of the second optical module based on the OH 41K. In this embodiment, the switching chip is connected to the second optical module through the first transmission medium. For descriptions of the first transmission medium, refer to the foregoing descriptions of the first transmission medium. Details are not described again. In this embodiment, an example in which the first transmission medium is a cable is used. The switching chip sends the service cell 401, the service cell 402, to the service cell 40K to the second electrical interface 511, the second electrical interface 512, to the second electrical interface 51K of the second optical module, respectively, through the cable. As shown in this embodiment, if the OH carries switching information, the switching chip switches the service cell based on the switching information. For example, if the switching information indicates unicast, the switching chip sends the service cell to the second optical module in a unicast manner. If the OH carries operation and maintenance information, the switching chip may perform corresponding operation and maintenance on the service cell based on the operation and maintenance information, for example, perform CRC on the service cell.

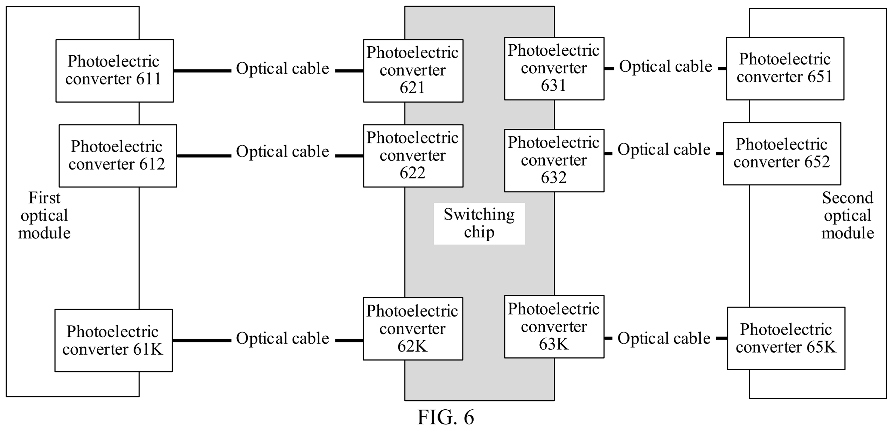

FIG. 6 is another example diagram of a structure of the switching device shown in FIG. 1a. In the example shown in FIG. 5, an example in which a service cell or a service packet between the first optical module and the switching chip is transmitted through an electrical signal, and a service cell or a service packet between the switching chip and the second optical module is transmitted through an electrical signal is used. In the example shown in FIG. 6, a service cell or a service packet between the first optical module and the switching chip is transmitted through an optical signal, and a service cell or a service packet between the switching chip and the second optical module is transmitted through an optical signal, thereby improving reliability of transmission of the service cell or the service packet and reducing a transmission delay of the service cell or service packet. The first optical module includes a photoelectric converter 611, a photoelectric converter 612, to a photoelectric converter 61K that are separately connected to the FIC. The switching chip includes a photoelectric converter 621, a photoelectric converter 622, to a photoelectric converter 62K. The photoelectric converter 621, the photoelectric converter 622, to the photoelectric converter 62K are connected to the photoelectric converter 611, the photoelectric converter 612, to the photoelectric converter 61K, respectively, through the first transmission medium. The first transmission medium shown in this example is an optical transmission medium, for example, an optical cable, an optical fiber, or an optical waveguide, used to transmit an optical signal. The switching chip further includes a photoelectric converter 631, a photoelectric converter 632, to a photoelectric converter 63K, and the second optical module includes a photoelectric converter 651, a photoelectric converter 652, to a photoelectric converter 65K, where the photoelectric converter 631, the photoelectric converter 632, to the photoelectric converter 63K are connected to the photoelectric converter 651, the photoelectric converter 652, to the optical-electrical converter 65K, respectively, through the first transmission medium. The first transmission medium shown in this embodiment is the optical cable. For descriptions of the first transmission medium, refer to the foregoing descriptions of the first transmission medium. Details are not described again.

The service cell 401 is used as an example. The photoelectric converter 611 performs electrical-to-optical conversion on the service cell 401 from the FIC to obtain a transmitted optical signal, and the photoelectric converter 611 transmits the transmitted optical signal to the photoelectric converter 621 of the switching chip through the optical cable. The photoelectric converter 621 performs optical-to-electrical conversion on the transmitted optical signal to obtain a service cell, extracts an OH from the service cell, determines to send the service cell to the photoelectric converter 631 based on the OH, the photoelectric converter 631 performs electrical-to-optical conversion on the service cell to obtain a transmitted optical signal, and sends the transmitted optical signal to the photoelectric converter 651 of the second optical module through the optical cable, and the photoelectric converter 651 performs optical-to-electrical conversion on the transmitted optical signal to obtain the service cell, to ensure that the second optical module can successfully receive the service cell from the first optical module.

In this embodiment, an example in which the switching chip switches a service cell is used. The switching chip may alternatively switch a service packet. For descriptions of switching the service packet by the switching chip, refer to the descriptions of switching the service cell by the switching chip in this embodiment. Details are not described again.

Step 207: The second optical module performs digital signal processing on the service cell or the service packet to obtain an electrical signal.

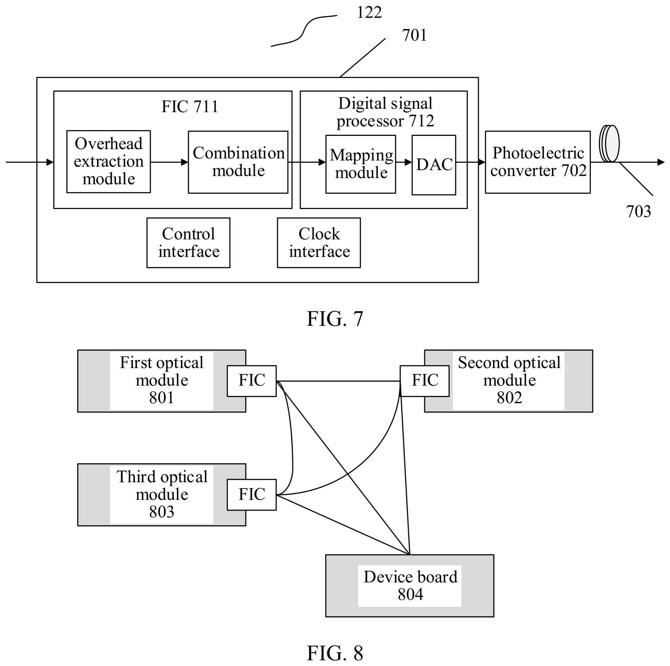

With reference to FIG. 7, a process in which the second optical module performs digital signal processing on the service cell or the service packet is described. FIG. 7 is an example diagram of a structure of the second optical module shown in FIG. 1b. The second optical module 122 includes a processor 701, a photoelectric converter 702, and an output optical fiber 703. The processor 701 shown in this embodiment specifically includes a FIC 711 and a digital signal processor 712. The digital signal processor 712 specifically includes a mapping module and a digital-to-analog converter (digital to analog converter, DAC). For descriptions of a type of the processor 701 and descriptions of the FIC, refer to FIG. 3. Details are not described again.

The FIC 711 of the second optical module specifically includes an overhead extraction module and a combination module. Still refer to FIG. 4a. After receiving the service cell, the overhead extraction module extracts an OH of each service cell. For example, the overhead extraction module extracts the OH 411 from the service cell 401, extracts the OH 412 from the service cell 402, and extracts the OH 41K from the service cell 40K. Each OH shown in this embodiment already carries timing information. For descriptions of the timing information, refer to step 204. Details are not described again. The combination module of the second optical module combines, based on the timing information carried in each OH, the K sliced signals from the first optical module into a service stream. In addition, a timing of each sliced signal in the demapped signal is the same as a timing of each sliced signal in the service stream. For example, if a first sliced signal is the first one of the K sliced signals sent by the first optical module, the first sliced signal is a sliced signal in the service stream obtained by the second optical module. If a second sliced signal is the second one of the K sliced signals sent by the first optical module, the second sliced signal is a second sliced signal in the service stream obtained by the second optical module. If a K^{th} sliced signal is the last one of the K sliced signals sent by the first optical module, the K^{th} sliced signal is a last sliced signal in the service stream obtained by the second optical module. It should be clarified that, in this embodiment, an example in which the plurality of service cells received by the second optical module come from the same first optical module is used. In another example, the plurality of service cells received by the second optical module may come from a plurality of different first optical modules. In this case, the second optical module combines the plurality of received service cells into a service stream based on timing information carried by each OH and based on timings for sending the plurality of service cells. Optionally, if the OH further carries operation and maintenance information, the FIC may perform operation and maintenance on the service cell based on the operation and maintenance information. For example, the FIC performs CRC on the service cell based on the operation and maintenance information.

The mapping module of the digital signal processor 712 maps the service stream, and converts the service stream into a mapped signal. In this embodiment, the mapping module performs constellation mapping on the service stream, and converts the service stream into the mapped signal. The constellation mapping means that the mapping module maps each bit of the service stream to a constellation point in a constellation diagram, to output the mapped signal. Based on the constellation mapping, spectral efficiency and a noise resistance capability of service transmission can be improved. The DAC receives the mapped signal from the mapping module, and performs digital/analog conversion on the mapped signal to output an electrical signal, where the electrical signal is an analog signal.

Step 208: The second optical module converts the electrical signal into an optical signal, and emits the optical signal.

Still refer to FIG. 7. The photoelectric converter 702 receives the electrical signal from the DAC, and performs electrical-to-optical conversion (demodulation) on the electrical signal to obtain the optical signal. The photoelectric converter 702 is connected to the output optical fiber 703, and the photoelectric converter 702 transmits the optical signal through the output optical fiber 703. The photoelectric converter 702 shown in this embodiment may use a direct modulated laser (direct modulated laser, DML), an electro-absorption modulated laser (electro-absorption modulated laser, EML), or a vertical cavity surface emitting laser (vertical cavity surface emitting laser, VCSEL). For another example, the photoelectric converter 702 may alternatively use a structure of a laser and a photoelectric converter. The photoelectric converter may be a Mach-Zehnder photoelectric converter (mach-zehnder modulator, MZM), a micro ring photoelectric converter (micro ring modulator, MRM), or the like.

In this embodiment, an example in which the second optical module performs digital signal processing is used. In another example, a second device board may alternatively perform digital signal processing. The second device board is connected to the second optical module. In this example, the second optical module is only configured to perform optical/electrical conversion. For descriptions of a process in which the second device board performs digital signal processing to obtain an electrical signal, refer to the foregoing descriptions of performing digital signal processing by the second optical module to obtain the electrical signal. Details are not described again.

In FIG. 7, the processor 701 of the second optical module may further include a control interface. Specifically, the digital signal processor includes the control interface, or the FIC includes the control interface. This is not specifically limited. The control interface is connected to a device board. The control interface is configured to receive control signaling from the device board. For example, the control signaling indicates the digital signal processor to perform a process of digital signal processing. For another example, the control signaling indicates the FIC to perform a process of combination to obtain a service stream. Descriptions of the control signaling are not limited in this embodiment, provided that the second optical module performs, based on the control instruction, the service transmission process shown in this embodiment. The processor 701 may further include a clock interface. For descriptions of a location of the clock interface, refer to the descriptions of a location of the control interface. Details are not described again. The second optical module receives clock information from the device board based on the clock interface, to implement clock synchronization.

By using the method shown in this embodiment, even if types of services received by the first optical module are increased with continuous growth of fixed network, mobile, and private line services, the first optical module can convert different services into a service cell or a service packet in a uniform format. The second optical module directly receives the service cell or the service packet, and because of the unified format of the service cell or the service packet, power consumption of processing the service cell or the service packet by the second optical module is reduced. In addition, because various types of services are transmitted through the service cell or the service packet, successful transmission of the service is ensured, thereby improving reliability of service transmission.

In the embodiment shown in FIG. 2, the service cell or the service packet emitted by the first optical module needs to be switched by the switching chip to the second optical module. However, in FIG. 8, the first optical module directly sends the service cell or the service packet to the second optical module. FIG. 8 is an example diagram of a structure of an embodiment of a switching device according to this application. The switching device shown in this embodiment includes a plurality of optical modules. A quantity of optical modules included in the switching device is not limited in this embodiment. In this embodiment, an example in which the switching device includes a first optical module 801, a second optical module 802, and a third optical module 803 is used. Any two of a FIC of the first optical module 801, a FIC of the second optical module 802, and a FIC of the third optical module 803 are connected through a transmission medium. For descriptions of the FIC, refer to FIG. 3 or FIG. 7. Details are not described again.

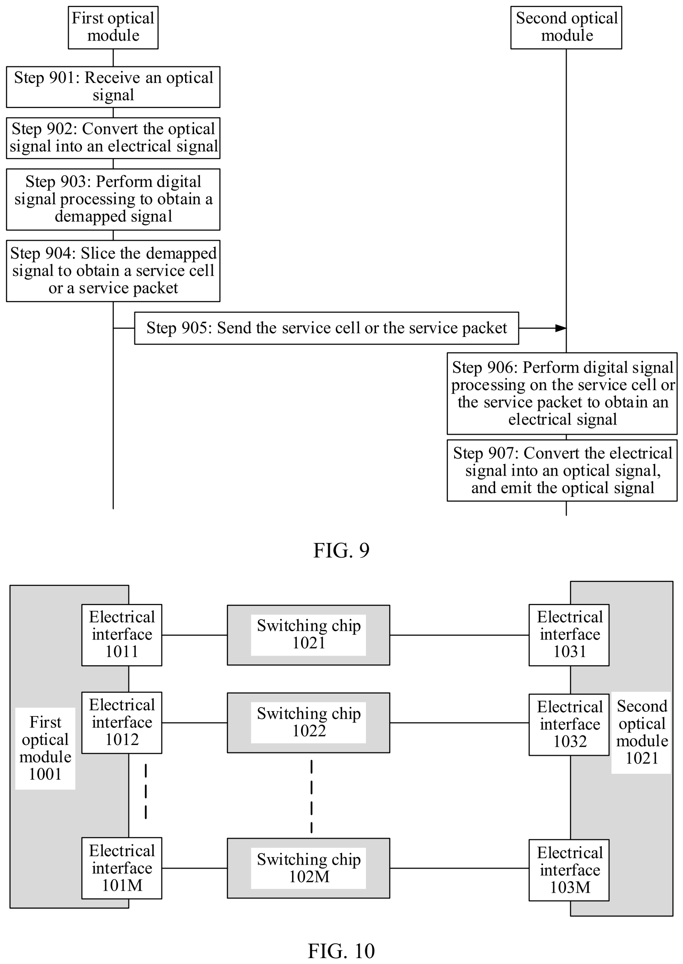

Based on FIG. 8, FIG. 9 is a flowchart of steps of a second embodiment of a service transmission method according to this application.

Step 901: A first optical module receives an optical signal.

Step 902: The first optical module converts the optical signal into an electrical signal.

Step 903: The first optical module performs digital signal processing on the electrical signal to obtain a demapped signal.

For descriptions of an execution process of step 901 to step 903 shown in this embodiment, refer to step 201 to step 203 corresponding to FIG. 2. Details are not described again.

Optionally, the FIC of the first optical module 801 shown in this embodiment may further be connected to a device board 804, the FIC of the first optical module 801 receives a service electrical signal from the device board 804, and the first optical module 801 performs digital signal processing on the service electrical signal from the device board 804 to obtain the demapped signal.

Step 904: The first optical module slices the demapped signal to obtain a service cell or a service packet.

For descriptions of an execution process of step 904 shown in this embodiment, refer to step 204 corresponding to FIG. 2. Details are not described again.

Step 905: The first optical module sends the service cell or the service packet to a second optical module.

Because the FIC of the first optical module shown in this embodiment is connected to the FIC of the second optical module through a second transmission medium, the first optical module may directly send the service cell or the service packet to the second optical module through the second transmission medium. For descriptions of the second transmission medium shown in this embodiment, refer to the descriptions of the first transmission medium in the embodiment corresponding to FIG. 2. Details are not described again.

Optionally, the FIC of the first optical module may include a photoelectric converter, and the FIC of the second optical module may include a photoelectric converter. The photoelectric converter of the first optical module is connected to the photoelectric converter of the second optical module through the second transmission medium. In this case, the photoelectric converter may perform electrical-to-optical conversion on the service cell or the service packet to obtain a transmitted optical signal, and the transmitted optical signal is sent to the photoelectric converter of the second optical module through the second transmission medium. The photoelectric converter of the second optical module performs electrical-to-optical conversion on the transmitted optical signal to obtain the service cell or the service packet. For descriptions of a specific process, refer to the descriptions of sending, by the first optical module, the transmitted optical signal to the switching chip shown in FIG. 6. Details are not described again.

Step 906: The second optical module performs digital signal processing on the service cell or the service packet to obtain an electrical signal.

For descriptions of an execution process of step 906 shown in this embodiment, refer to step 207. Details are not described again.

Step 907: The second optical module converts the electrical signal into an optical signal, and emits the optical signal.

For descriptions of an execution process of step 906 and step 907 shown in this embodiment, refer to step 207 and step 208 corresponding to FIG. 2. A specific execution process is not described again.

In the embodiment shown in FIG. 8, for descriptions of a process of exchanging a service cell or a service packet between any two optical modules of the first optical module, the second optical module, and the third optical module, refer to the descriptions of sending, by the first optical module, a service cell or a service packet to the second optical module shown in FIG. 9. Details are not described again.

By using the method shown in this embodiment, even if types of services received by the first optical module are increased with continuous growth of fixed network, mobile, and private line services, the first optical module can convert different services into a service cell or a service packet in a uniform format. The second optical module directly receives the service cell or the service packet, and because of the unified format of the service cell or the service packet, power consumption of processing the service cell or the service packet by the second optical module is reduced. In addition, in a process in which the first optical module sends the service cell or the service packet to the second optical module, switching by using the switching chip is not required, thereby reducing a delay of transmitting the service cell or the service packet.

In the example shown in FIG. 1a, the first optical module is connected to one switching chip. In the embodiment shown in FIG. 10, the first optical module may be connected to a plurality of different switching chips. FIG. 10 is an example diagram of a structure of another embodiment of a switching device according to this application.

A FIC of a first optical module 1001 shown in this embodiment includes a plurality of electrical interfaces. For example, the FIC of the first optical module includes M electrical interfaces, namely, an electrical interface 1011, an electrical interface 1012, to an electrical interface 101M, where M is an integer greater than 1. The M electrical interfaces of the first optical module are respectively connected to M switching chips. For example, the electrical interface 1011 is connected to a switching chip 1021, the electrical interface 1012 is connected to a switching chip 1022, and by analogy, the electrical interface 101M is connected to a switching chip 102M. A FIC of a second optical module 1021 includes M electrical interfaces, namely, an electrical interface 1031, an electrical interface 1032, to an electrical interface 103M. The electrical interface 1031, the electrical interface 1032, to the electrical interface 103M are respectively connected to a switching chip 1021, a switching chip 1022, to a switching chip 102M.

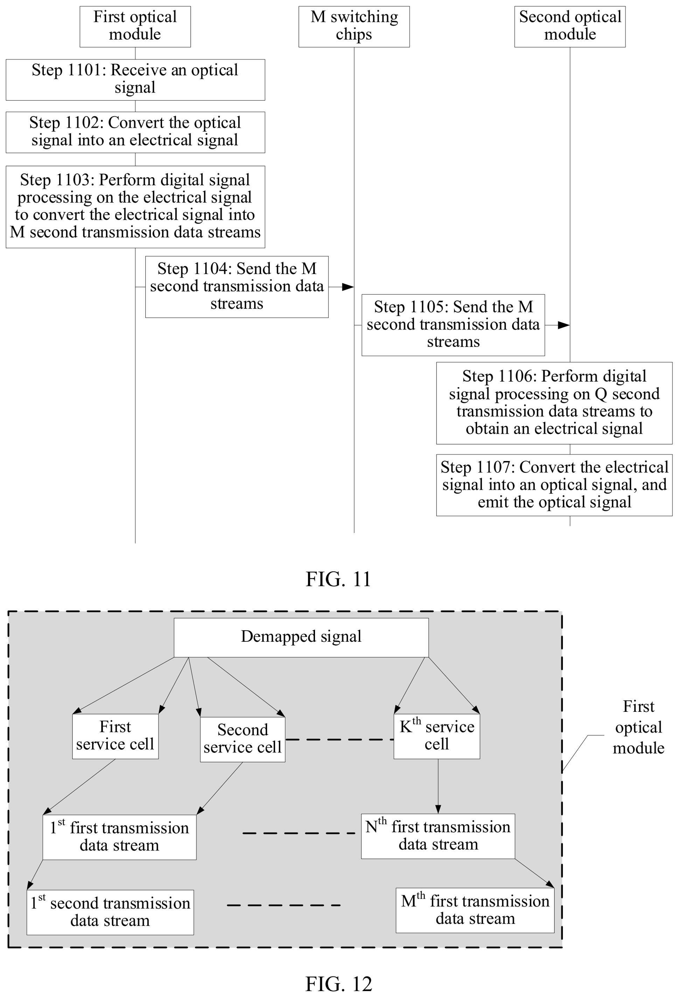

Based on the switching device shown in FIG. 10, FIG. 11 is a flowchart of steps of a third embodiment of a service transmission method according to this application.

Step 1101: A first optical module receives an optical signal.

Step 1102: The first optical module converts the optical signal into an electrical signal.

For descriptions of an execution process of step 1101 and step 1102 shown in this embodiment, refer to step 201 and step 202 corresponding to FIG. 2. Details are not described again.

Step 1103: The first optical module performs digital signal processing on the electrical signal to convert the electrical signal into M second transmission data streams.

Step 1104: The first optical module sends the M second transmission data streams to M switching chips.

The first optical module performs digital signal processing on the electrical signal to obtain a demapped signal. For descriptions of a process in which the first optical module obtains the demapped signal, refer to the descriptions of obtaining the demapped signal shown in step 203 corresponding to FIG. 2. Details are not described again.

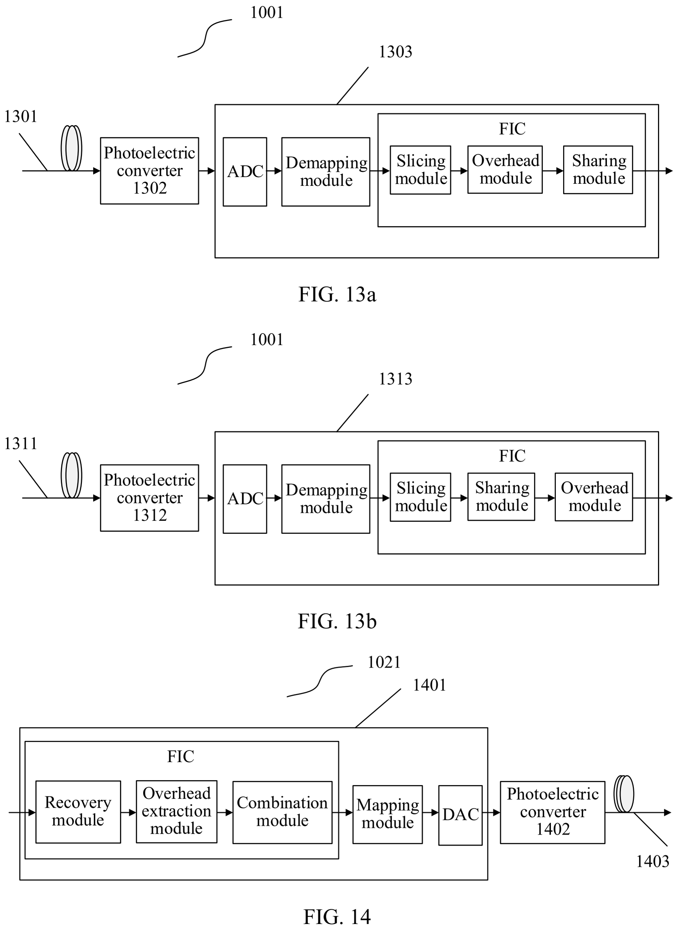

With reference to FIG. 12 and FIG. 13a, a process in which the first optical module obtains the M second transmission data streams is described. FIG. 12 is an example diagram of a third type of slicing according to this application. FIG. 13a is an example diagram of a structure of an embodiment of the first optical module shown in FIG. 10. The first optical module 1001 shown in this embodiment specifically includes an input optical fiber 1301, a photoelectric converter 1302, and a processor 1303. For specific descriptions, refer to the descriptions corresponding to FIG. 3. Details are not described again. A slicing module, an overhead module, and a sharing module in the FIC shown in this embodiment are sequentially connected.

The slicing module slices the demapped signal to obtain K sliced signals. The slicing module shown in this embodiment sends K slices to the overhead module, and the overhead module obtains K service cells based on the K sliced signals. For descriptions of the K service cells obtained by the overhead module, refer to the descriptions corresponding to FIG. 4a. Details are not described again. After adding an OH to each sliced signal, the overhead module sends N first transmission data streams to the sharing module, where each first transmission data stream includes at least one service cell, and N is any integer not less than 1. For example, a 1^{st} first transmission data stream obtained by the overhead module includes a first service cell and a second service cell. A quantity of service cells included in the first transmission data stream is not limited in this embodiment. In this embodiment, an example in which each first transmission data stream includes at least one service cell is used. In another example, the first transmission data stream may alternatively include at least one service packet. For descriptions of a specific process, refer to the descriptions of the first transmission data stream including a service cell. Details are not described again.

The sharing module performs redundancy protection on the N first transmission data streams, to convert the N first transmission data streams into M second transmission data streams, where M is any integer greater than N. In this embodiment, M=P+Q is used as an example. In the M switching chips, if P switching chips are faulty, it can still be ensured that the first optical module can successfully send a service to a second optical module, thereby ensuring reliability of service transmission from the first optical module to the second optical module. To ensure that the first optical module successfully transmits the service to the second optical module, it needs to be ensured that at least Q switching chips in the M switching chips can normally switch a service cell or a service packet. Specifically, the sharing module obtains multiplied traffic Y, where Y=X×(P+Q)/Q. X is a total traffic volume of the N first transmission data streams. The multiplied traffic Y is a total traffic volume of the M second transmission data streams. It may be understood that Y>X in this embodiment. The sharing module may add redundant information to traffic X. The sharing module encodes the traffic X in advance according to a specific algorithm, so that the added redundant information carries signal characteristics of the N first transmission data streams. The sharing module evenly divides the traffic Y into the M second transmission data streams. In this case, the sharing module may send the M second transmission data streams to the M electrical interfaces. It may be understood that the electrical interface 1011 sends a 1^{st} second transmission data stream to the switching chip 1021, the electrical interface 1012 sends a 2^{nd} second transmission data stream to the switching chip 1022, and by analogy, the electrical interface 101M sends an M^{th} second transmission data stream to the switching chip 102M.

Descriptions of the structure of the first optical module shown in FIG. 13a are an optional example, and are not limited. For example, FIG. 13b is an example diagram of a structure of another embodiment of the first optical module shown in FIG. 10. The first optical module 1001 shown in FIG. 13b includes an input optical fiber 1311, a photoelectric converter 1312, and a processor 1313. For descriptions of the input optical fiber 1311, the photoelectric converter 1312, and the processor 1313, refer to FIG. 13a. Details are not described again. A FIC shown in FIG. 13b includes a slicing module, a sharing module, and an overhead module that are sequentially connected. In other words, the sharing module is located between the slicing module and the overhead module. According to the first optical module shown in FIG. 13b, after obtaining the demapped signal, the slicing module slices the demapped signal to obtain N first transmission data streams, where each first transmission data stream includes at least one sliced signal. The sharing module performs redundancy protection on the N first transmission data streams to obtain M second transmission data streams. For descriptions of the redundancy protection, refer to FIG. 13a. Details are not described again. The sharing module sends the M second transmission data streams to the overhead module, the overhead module adds an OH to each sliced signal in the second transmission data stream, and the overhead module sends the M second transmission data streams to which the OH is added to the M switching chips. For a specific sending process, refer to the descriptions corresponding to FIG. 10. Details are not described again.

Step 1105: The M switching chips send the M second transmission data streams to the second optical module.

Each switching chip shown in this embodiment switches the second transmission data stream based on the OH included in the second transmission data stream, to transmit the second transmission data stream to the second optical module. For descriptions of a specific process, refer step 206 corresponding to FIG. 2. Details are not described again.

Step 1106: The second optical module performs digital signal processing on the Q second transmission data streams to obtain an electrical signal.

With reference to FIG. 14, a process in which the second optical module performs digital signal processing on the Q second transmission data streams is described. FIG. 14 is an example diagram of a structure of an embodiment of the second optical module shown in FIG. 10. The second optical module 1021 includes a processor 1401, a photoelectric converter 1402, and an output optical fiber 1403. The processor 1401 shown in this embodiment specifically includes a FIC, a mapping module, and a DAC. For descriptions of a type of the processor 1401, refer to FIG. 3. Details are not described again. The FIC of the second optical module 1021 shown in this embodiment specifically includes a recovery module, an overhead extraction module, and a combination module that are sequentially connected. The recovery module receives the Q second transmission data streams. In this embodiment, if P switching chips in the M switching chips are faulty, the M switching chips include Q switching chips that can perform switching normally. The Q switching chips transmit the Q second transmission data streams to the second optical module. The recovery module of the second optical module can perform data decoding on the Q second transmission data streams based on redundancy protection, so that even if P second transmission data streams in the M second transmission data streams are lost, the recovery module of the second optical module can still recover the M first transmission data streams based on the Q second transmission data streams, to ensure that the recovery module can accurately recover, from the Q second transmission data streams, all service cells or service packets (namely, the N first transmission data streams) sent by the first optical module to the second optical module. For descriptions of the overhead extraction module and the combination module shown in this embodiment, and descriptions of the mapping module and DAC processing to obtain an electrical signal, refer to the descriptions corresponding to FIG. 7. Details are not described again.

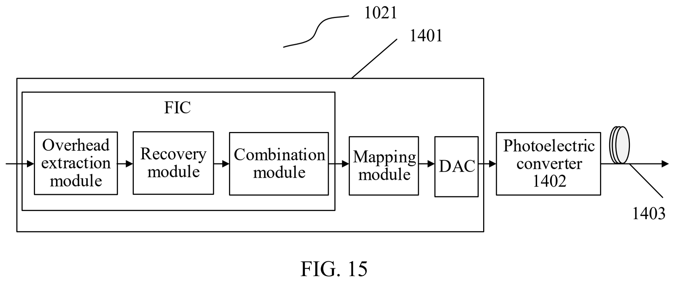

It should be clarified that the descriptions of the second optical module in this embodiment are an optional example, and are not limited. For example, FIG. 15 is an example diagram of a structure of another embodiment of the second optical module shown in FIG. 10. The second optical module 1021 includes a processor 1401, a photoelectric converter 1402, and an output optical fiber 1403. For specific descriptions, refer to FIG. 14. Details are not described again. The FIC of the second optical module 1021 shown in this embodiment specifically includes an overhead extraction module, a recovery module, and a combination module that are sequentially connected. The overhead extraction module extracts OHs from the M second transmission data streams, and sends the M second transmission data streams from which the OHs are extracted to the recovery module. The recovery module performs redundancy protection on the M second transmission data streams. For a process of the redundancy protection, refer to FIG. 14. Details are not described again. It may be understood that the recovery module recovers the M first transmission data streams based on the Q second transmission data streams, to ensure that the recovery module can accurately recover, from the Q second transmission data streams, all service cells or service packets (namely, the N first transmission data streams) sent by the first optical module to the second optical module. For descriptions of the overhead extraction module and the combination module shown in this embodiment, and descriptions of the mapping module and DAC processing to obtain an electrical signal, refer to the descriptions corresponding to FIG. 7. Details are not described again.

Step 1107: The second optical module converts the electrical signal into an optical signal, and emits the optical signal.

For descriptions of an execution process of step 1107 shown in this embodiment, refer to step 208. Details are not described again.

By using the method shown in this embodiment, even if types of services received by the first optical module are increased with continuous growth of fixed network, mobile, and private line services, the first optical module can convert different services into a service cell or a service packet in a uniform format. The second optical module directly receives the service cell or the service packet, and because of the unified format of the service cell or the service packet, power consumption of processing the service cell or the service packet by the second optical module is reduced. In addition, the FIC of the first optical module is connected to the M switching chips. Even if some of the M switching chips are faulty, the second optical module can successfully recover, based on redundancy protection, the service cell or the service packet sent by the first optical module to the second optical module, thereby improving reliability of service cell or service packet transmission.

In the embodiment shown in FIG. 11, an example in which the first optical module converts, based on redundancy protection, the N first transmission data streams into the M second transmission data streams for sending to the second optical module is used, and is not limited. For example, when the sharing module receives a service cell or a service packet, and it is determined that the first optical module includes the M electrical interfaces, the sharing module performs load balancing on the received service cell or service packet, to obtain the M second transmission data streams. M in this example is any integer greater than 1. Specifically, the sharing module obtains total traffic M1 of the service cell or the service packet, and then the sharing module determines that traffic that is used by each electrical interface of the M electrical interfaces of the first optical module for sending is M1/M. It may be understood that, traffic of each second transmission data stream emitted by the first optical module is M1/M. In this embodiment, an example in which traffic emitted from different electrical interfaces of the first optical module is equal is used. In another example, traffic emitted from different electrical interfaces of the first optical module may alternatively be approximately equal. The first optical module shown in this embodiment sends the M second transmission data streams to the switching chip in a load balancing manner. This effectively improves, based on load balancing, efficiency and flexibility of switching the M second transmission data streams by the switching chip, and ensures that the switching chip successfully switches the M second transmission data streams.

In the foregoing example, an example in which the sharing module sends the N first transmission data streams based on redundancy protection or load balancing is used. In this example, the sharing module may send the N first transmission data streams based on a fault event. In this example, N is not greater than M. For example, the first optical module has N (for example, 15) first electrical interfaces, and the sharing module of the first optical module may obtain the N first transmission data streams. However, the N first electrical interfaces include a faulty first electrical interface. The faulty first electrical interface means that a data stream emitted from the first electrical interface cannot be successfully transmitted to a corresponding target port. A reason that there is the faulty first interface may be that a fault occurs on the first electrical interface itself, a fault occurs on a transmission medium connected between the first electrical interface and the switching chip, a fault occurs on the switching chip itself and the data stream from the first electrical interface cannot be switched, a fault occurs on a transmission medium between the switching chip and the target port, and the like. This is not specifically limited in this embodiment. The first optical module determines that M (for example, 10) first electrical interfaces of the N first electrical interfaces work normally. In this case, the sharing module converts the 15 first transmission data streams into 10 second transmission data streams, and separately sends the 10 second transmission data streams through the 10 first electrical interfaces that work normally, thereby effectively ensuring successful transmission of the M second transmission data streams in the switching device. The first optical module shown in this example may receive, from a network management device or a device board, information indicating the faulty first electrical interface. For another example, the first optical module may periodically detect each first electrical interface to obtain the faulty first electrical interface.

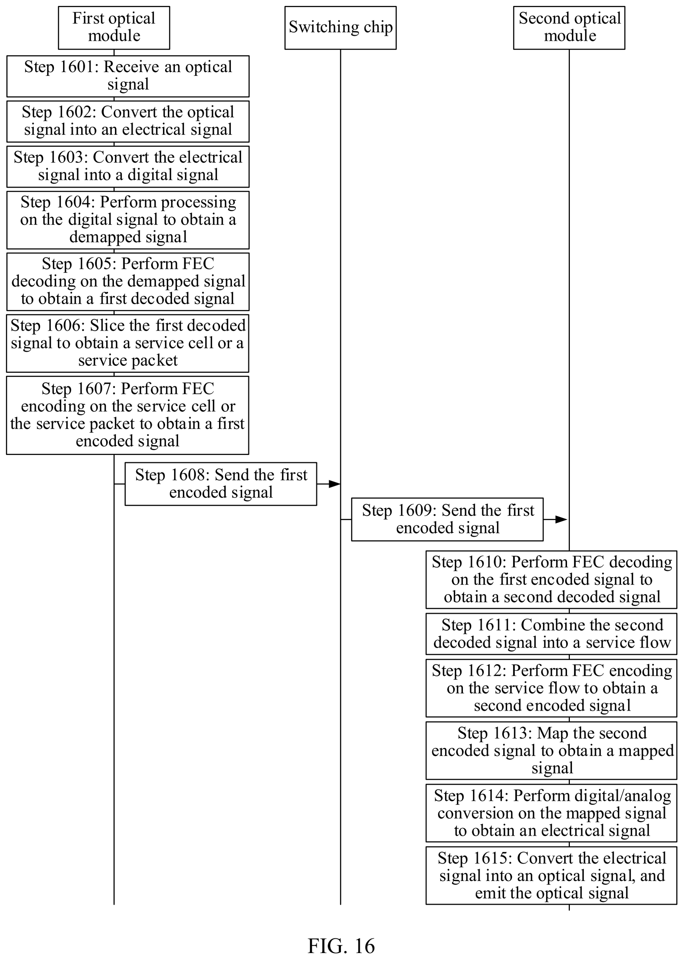

The following describes a specific execution process of the service transmission method with reference to a specific type of the optical module. FIG. 16 is a flowchart of steps of a fourth embodiment of a service transmission method according to this application.

Step 1601: A first optical module receives an optical signal.

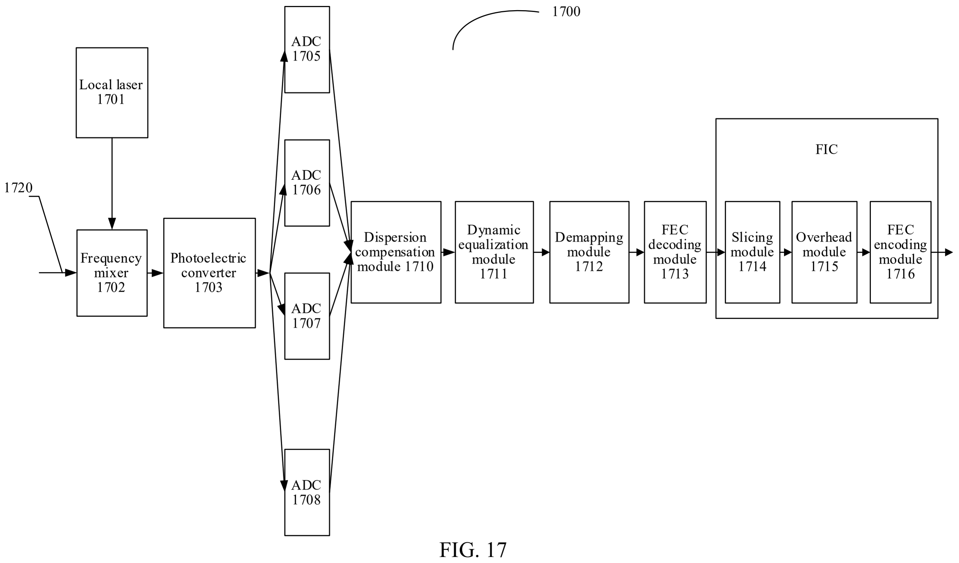

In this embodiment, an example in which the first optical module is a coherent optical module is used. With reference to FIG. 17, FIG. 17 is an example diagram of a structure of an embodiment of a coherent optical module according to this application. The first optical module 1700 includes an input optical fiber 1720, the input optical fiber 1720 is configured to receive the optical signal, and the optical signal carries service data. For descriptions of the service data, refer to step 201 corresponding to FIG. 2. Details are not described again.

Step 1602: The first optical module converts the optical signal into an electrical signal.

In FIG. 17, the input optical fiber 1720, a frequency mixer 1702, and a photoelectric converter 1703 of the first optical module 1700 are sequentially connected. The frequency mixer 1702 is further connected to a local laser 1701. The frequency mixer 1702 is configured to decouple an optical signal from the input optical fiber 1720 to obtain a decoupled optical signal, is further configured to perform polarization splitting on the decoupled optical signal to form a first modulated signal and a second modulated signal, and is further configured to mix an optical signal from the local laser 1701 and the first modulated signal to restore a first analog signal of a low-frequency baseband and a second analog signal of a low-frequency baseband. The frequency mixer 1702 is further configured to perform frequency mixing on the optical signal from the local laser 1701 and the second modulated signal to restore a third analog signal of a low-frequency baseband and a fourth analog signal of a low-frequency baseband.

Step 1603: The first optical module converts the electrical signal into a digital signal.

In FIG. 17, the photoelectric converter 1703 is separately connected to four ADCs, namely, an ADC 1705, an ADC 1706, an ADC 1707, and an ADC 1708. The ADC1705, the ADC1706, the ADC1707, and the ADC1708 are respectively configured to perform analog/digital conversion on a first analog signal, a second analog signal, a third analog signal, and a fourth analog signal to obtain four digital signals, namely, a first digital signal, a second digital signal, a third digital signal, and a fourth digital signal.

Step 1604: The first optical module processes the digital signal to obtain a demapped signal.

In FIG. 17, the processing module further includes a dispersion compensation module 1710 connected to the ADC 1705, the ADC 1706, the ADC 1707, and the ADC 1708. A dynamic equalization module 1711 is separately connected to the dispersion compensation module and a demapping module 1712. The dispersion compensation module 1710 is configured to perform dispersion compensation on the first digital signal and the second digital signal to obtain a first dispersion compensation signal, and the dispersion compensation module 1710 is further configured to perform dispersion compensation on the third digital signal and the fourth digital signal to obtain a second dispersion compensation signal. The dynamic equalization module 1711 is configured to dynamically equalize the first dispersion compensation signal and the second dispersion compensation signal, for example, through polarization compensation, phase recovery, post-filtering, sequence detection, and de-interleaving. This is not specifically limited. The dynamic equalization module 1711 emits four sequence signals to the demapping module 1712. The demapping module 1712 is configured to perform constellation demapping on the four sequence signals to obtain a demapped signal. For descriptions of constellation demapping, refer to step 203 corresponding to FIG. 2. Details are not described again.

Step 1605: The first optical module performs FEC decoding on the demapped signal to obtain a first decoded signal.

In FIG. 17, the first optical module further includes an FEC decoding module 1713 connected to the demapping module 1712, and the FEC decoding module 1713 is configured to perform FEC decoding on the demapped signal to obtain the first decoded signal. FEC decoding of the FEC decoding module 1713 can improve transmission reliability of an optical signal received by the first optical module, reduce a bit error rate of the optical signal, and effectively suppress intersymbol interference (intersymbol interference, ISI) on a transmission path of the optical signal.

Step 1606: The first optical module slices the first decoded signal to obtain a service cell or a service packet.

In FIG. 17, a FIC of the first optical module includes a slicing module 1714, an overhead module 1715, and an FEC encoding module 1716 that are sequentially connected. The slicing module 1714 is configured to slice the first decoded signal into a plurality of sliced signals. The overhead module 1715 adds an OH to each sliced signal to obtain a service cell. For descriptions of a specific process, refer to step 204 corresponding to FIG. 2. Details are not described again.

Step 1607: The first optical module performs FEC encoding on the service cell or the service packet to obtain a first encoded signal.

The FEC encoding module 1716 of the first optical module is configured to perform FEC encoding on the service cell or the service packet to obtain the first encoded signal. FEC encoding performed on the service cell or the service packet can improve reliability of a channel between the first optical module and the switching chip, and reduce a bit error rate of transmitting the service cell or the service packet to a switching chip.

The FIC of the first optical module shown in this embodiment may further include a sharing module. For descriptions of the sharing module, refer to FIG. 13a and FIG. 13b. Details are not described again.

Step 1608: The first optical module sends the first encoded signal to the switching chip.

Step 1609: The switching chip sends the first encoded signal to a second optical module.

For descriptions of step 1608 and step 1609 in this embodiment, refer to step 205 and step 206 corresponding to FIG. 2. Details are not described again. In this embodiment, an example in which the second optical module is a coherent optical module is used.

Step 1610: The second optical module performs FEC decoding on the first encoded signal to obtain a second decoded signal.

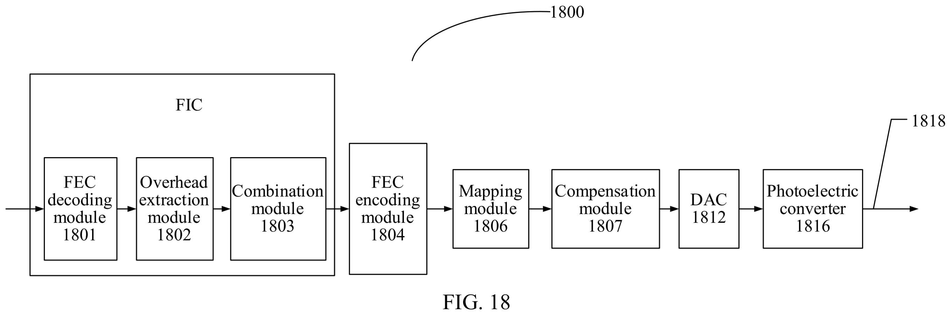

FIG. 18 is an example diagram of a structure of another embodiment of a coherent optical module according to this application. The second optical module shown in FIG. 18 includes a FIC, and the FIC specifically includes an FEC decoding module 1801, an overhead extraction module 1802, and a combination module 1803 that are sequentially connected. The FEC decoding module receives the first encoded signal, and performs FEC decoding on the first encoded signal to obtain the second decoded signal. The FEC decoding module 1801 performs FEC decoding on the first encoded signal, to improve reliability of a channel between the second optical module and the switching chip, and reduce a bit error rate of a service cell or a service packet transmitted between the second optical module and the switching chip.

The FIC of the second optical module shown in this embodiment may further include a recovery module. For descriptions of the recovery module, refer to FIG. 14 and FIG. 15. Details are not described again.

Step 1611: The second optical module combines the second decoded signal into a service stream.

The overhead extraction module 1802 receives the second decoded signal, and extracts the OH. The combination module 1803 forms the service stream by using the second decoded signal based on the OH. For descriptions of a specific process, refer to step 207 corresponding to FIG. 2. Details are not described again.

Step 1612: The second optical module performs FEC encoding on the service stream to obtain a second encoded signal.

The second optical module shown in FIG. 18 further includes an FEC encoding module 1804 connected to the FIC. The FEC encoding module 1804 is configured to perform FEC encoding on the service stream to obtain the second encoded signal. The FEC encoding module 1804 performs FEC encoding on the service stream, to improve transmission reliability of the optical signal emitted from the second optical module, and reduce a packet loss rate and a bit error rate of the optical signal emitted from the second optical module.

Step 1613: The second optical module maps the second encoded signal to obtain a mapped signal.

The FEC encoding module 1804 shown in FIG. 18 may further interleave the second encoded signal to obtain an interleaved sequence. Interleaving is used to change an information structure of the second encoded signal to the greatest extent without changing information content of the second encoded signal. The FEC encoding module 1804 transmits the second encoded signal to a mapping module 1806. The mapping module 1806 is configured to map the second encoded signal to obtain the mapped signal. For example, the mapping module 1806 performs constellation mapping on the second encoded signal to obtain the mapped signal. For descriptions of the mapping module, refer to the descriptions corresponding to FIG. 7. Details are not described again.

The FEC encoding module 1804 may send the mapped signal to a compensation module 1807, and the compensation module 1807 may perform pre-filtering on the mapped signal. Pre-filtering is finite impulse response filtering. Compared with the mapped signal before pre-filtering, the filtered signal after pre-filtering does not lose information while occupying a narrower bandwidth. For another example, the compensation module 1807 may further perform channel compensation, MIMO equalization, and dispersion estimation on the mapped signal to output a compensated signal. This is not specifically limited.

Step 1614: The second optical module performs digital/analog conversion on the mapped signal to obtain an electrical signal.

As shown in FIG. 18, a DAC 1812 is connected to 1804, and the DAC 1812 performs digital/analog conversion on the compensated signal from the compensation module 1807 to output the electrical signal, where the electrical signal is an analog signal.

Step 1615: The second optical module converts the electrical signal into an optical signal, and emits the optical signal.

The second optical module shown in FIG. 18 includes a photoelectric converter 1816 connected to the DAC 1812. For descriptions of a type of the photoelectric converter 1816, refer to the descriptions corresponding to FIG. 7. Details are not described again. The photoelectric converter 1816 is configured to perform electrical-to-optical conversion on the electrical signal from the DAC 1812 to output an optical signal. For example, the photoelectric converter 1816 may modulate the electrical signal through coherent bipolar modulation, for example, quadrature phase shift keying (quadrature phase shift keying, QPSK) or quadrature amplitude modulation (quadrature amplitude modulation, QAM), to obtain the optical signal. The photoelectric converter 1816 further transmits the optical signal to an output optical fiber 1818 of the second optical module.

By using the method shown in this embodiment, the FIC can adapt to the coherent optical module, the first optical module can perform optical/electrical conversion and channel processing through a coherent technology, to obtain a service cell or a service packet, and the first optical module can convert different services into a service cell or a service packet in a uniform format. The second optical module directly receives the service cell or the service packet, and because of the unified format of the service cell or the service packet, power consumption of processing the service cell or the service packet by the second optical module is reduced.

When the coherent optical module is used, the method shown in any one of the embodiments in FIG. 2, FIG. 9, FIG. 11, and FIG. 15 may be further performed. A specific execution process is not described again.

A specific type of an optical module for performing the service transmission method is not limited in this application. For example, the service transmission methods shown in FIG. 2,

FIG. 9, FIG. 11, FIG. 15, and FIG. 16 may be further performed through a direct detection optical module used in a direct modulation and detection system. The direct modulation and detection system is also referred to as an intensity modulation and direct detection system. If the first optical module and the second optical module are direct detection optical modules, the first optical module performs intensity demodulation on an optical signal to obtain an electrical signal. In a process of receiving a service cell or a service packet from the first optical module and converting the service cell or the service packet, the second optical module obtains an optical signal by performing intensity modulation on an electrical signal, where a code pattern of the optical signal may be a non-return-to-zero (non-return-to-zero, NRZ) code, 4 pulse amplitude modulation (4 pulse amplitude modulation, PAM4), pulse amplitude modulation (pulse amplitude modulation, PAM), or the like. If the direct detection optical module is used in the embodiment shown in FIG. 16, the first optical module may perform FEC decoding and FEC encoding as shown in FIG. 16, and the second optical module may perform FEC decoding and FEC encoding as shown in FIG. 16. Further, optionally, the first optical module may perform FEC decoding only once, and the second optical module may perform FEC encoding only once. For descriptions of processes of FEC encoding and FEC decoding, refer to FIG. 16. Details are not described again.

In this embodiment of this application, the service transmission methods shown in FIG. 2, FIG. 9, FIG. 11, FIG. 15, and FIG. 16 may be further performed by using an Ethernet optical module. In this case, the first optical module can convert an Ethernet service into a service cell or a service packet, and the second optical module can convert the service cell or the service packet from the first optical module into an optical signal and send the optical signal outward. For a specific execution process, refer to the service transmission methods shown in FIG. 2, FIG. 9, FIG. 11, FIG. 15, and FIG. 16. A specific execution process is not described again. If the optical module shown in this embodiment is an Ethernet optical module, the Ethernet optical module may further include a network processor (network processor, NP) or a traffic management (traffic management, TM) module. The TM module mainly performs quality of service (quality of service, QoS) control on a service stream based on a network transmission bandwidth and a priority of the service stream. The NP is a core chip for processing an Ethernet service, and mainly performs forwarding and processing tasks for various Ethernet services, for example, performs packet processing, protocol analysis, and route searching on Ethernet service data. It may be understood that, after receiving an Ethernet data frame, the NP and the TM module in the first optical module perform forwarding processing and quality of service control on the Ethernet data frame. The NP and the TM module in the second optical module complete forwarding processing to an output optical fiber and quality of service control.

An embodiment of this application further provides an optical module configured to perform any embodiment in FIG. 2, FIG. 9, FIG. 11, and FIG. 16. For a specific execution process, refer to any embodiment in FIG. 2, FIG. 9, FIG. 11, and FIG. 16. Details are not described again. For a structure of the optical module, refer to the descriptions of the structures in FIG. 3, FIG. 7, FIG. 13a, FIG. 13b, FIG. 14, FIG. 15, FIG. 17, and FIG. 18. Details are not described again.

An embodiment of this application further provides a transmission device configured to perform any embodiment in FIG. 2, FIG. 9, FIG. 11, and FIG. 16. For a specific execution process, refer to any embodiment in FIG. 2, FIG. 9, FIG. 11, and FIG. 16. Details are not described again. The transmission device includes a device board and an optical module connected to the device board. For a structure of the optical module, refer to the descriptions of the structures in FIG. 3, FIG. 7, FIG. 13a, FIG. 13b, FIG. 14, FIG. 15, FIG. 17, and FIG. 18. Details are not described again.

An embodiment of this application further provides a switching device configured to perform any embodiment in FIG. 2, FIG. 9, FIG. 11, and FIG. 16. For a specific execution process, refer to any embodiment in FIG. 2, FIG. 9, FIG. 11, and FIG. 16. Details are not described again. For a structure of the switching device, refer to FIG. 1b. Details are not described again.

An embodiment of this application further provides an optical network configured to perform any embodiment in FIG. 2, FIG. 9, FIG. 11, and FIG. 16. For a specific execution process, refer to any embodiment in FIG. 2, FIG. 9, FIG. 11, and FIG. 16. Details are not described again. For a structure of the optical network, refer to FIG. 1a. Details are not described again.

An embodiment of this application further provides a computer-readable storage medium. The computer-readable storage medium stores computer instructions. When the computer instructions are run on a computer, the computer performs the method shown in any one of the embodiments in FIG. 2, FIG. 9, FIG. 11, and FIG. 16.

The following describes a structure of an optical module provided in this application from a perspective of a hardware structure.

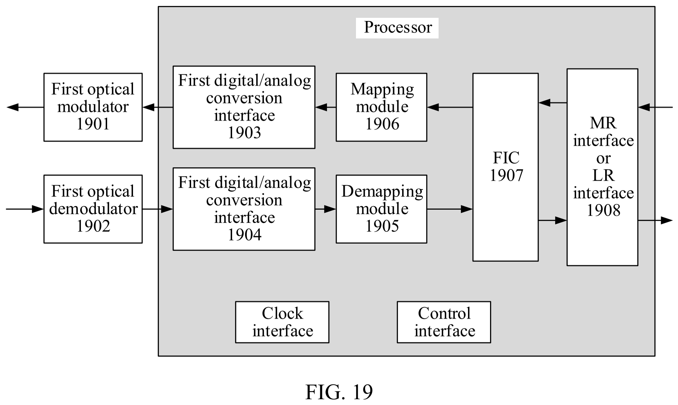

FIG. 19 is an example diagram of a structure of a first embodiment of an optical module according to this application. The optical module shown in this embodiment includes a photoelectric converter and a processor that are sequentially connected. The photoelectric converter specifically includes a first optical modulator 1901 and a first optical demodulator 1902, and the processor includes a first digital/analog conversion interface 1903, a mapping module 1906, and a FIC 1907 that are sequentially connected to the first optical modulator 1901. The processor further includes a first digital/analog conversion interface 1904, a demapping module 1905, and a FIC 1907 that are sequentially connected to the first optical demodulator 1902. The FIC 1907 is further connected to a medium-reach (MR) interface or a long-reach (LR) interface 1908. The MR interface and the LR interface in this embodiment belong to a Serdes interface, and Serdes is short for a serializer (serializer)/deserializer (deserializer).

Optionally, the processor shown in this embodiment further includes a clock interface and/or a control interface. For descriptions of the control interface and the clock interface, refer to the descriptions corresponding to FIG. 3 or FIG. 7. Details are not described again.

According to the structure of the optical module shown in this embodiment, because the first optical module directly sends, through the MR interface or the LR interface 1908, a signal on which the processor performs digital signal processing, transmission through the MR interface or the LR interface 1908 effectively reduces an insertion loss for transmitting the signal on which digital signal processing is performed.

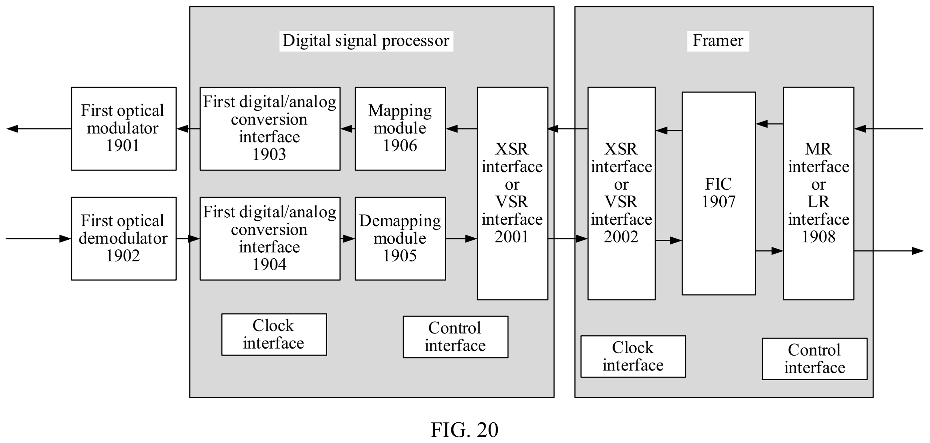

The following specifically describes several optional structures of an optical module. FIG. 20 is an example diagram of a structure of a second embodiment of an optical module according to this application.

The optical module shown in this embodiment includes a first photoelectric converter and a processor that are sequentially connected. The first photoelectric converter specifically includes a first optical modulator 1901 and a first optical demodulator 1902. For specific descriptions, refer to the descriptions corresponding to FIG. 19. Details are not described again. The processor in this embodiment specifically includes a digital signal processor and a framer. The digital signal processor specifically includes a first digital/analog conversion interface 1903 and a mapping module 1906 that are sequentially connected to the first optical modulator 1901. The digital signal processor further includes a first digital/analog conversion interface 1904 and a demapping module 1905 that are sequentially connected to the first optical demodulator 1902. The first optical demodulator 1902 and the mapping module 1906 are respectively connected to an extra-short-reach (XSR) interface or a very-short-reach (VSR) interface 2001. For specific descriptions of the first digital/analog conversion interface 1903, the mapping module 1906, the first digital/analog conversion interface 1904, and the demapping module 1905, refer to FIG. 19. Details are not described again. The framer specifically includes an XSR interface or a VSR interface 2002, and the XSR interface or the VSR interface 2002 of the framer is connected to the XSR interface or the VSR interface 2001 of the digital signal processor. The framer further includes a FIC 1907 and an MR interface or an LR interface 1908 that are sequentially connected to the XSR interface or the VSR interface 2002. For specific descriptions of the FIC 1907 and the MR interface or LR interface 1908, refer to FIG. 19. Details are not described again. The XSR interface or the VSR interface shown in this embodiment belongs to a Serdes interface.

In this embodiment, the optical module includes a circuit board, and the digital signal processor and the framer are independently installed on the circuit board. Specifically, the digital signal processor is installed on the circuit board, and is electrically connected to a trace of the circuit board. Similarly, the framer is installed on the circuit board, and is electrically connected to the trace of the circuit board. In this embodiment, an example in which the circuit board is a printed circuit board (printed circuit board, PCB) is used.

Optionally, the signal processor in this embodiment includes a clock interface and/or a control interface, and the framer includes a clock interface and/or a control interface. For example, the clock interface and/or the control interface of the signal processor and the clock interface and/or the control interface of the framer are all electrically connected to the device board, to receive control signaling or clock information from the device board. For another example, the control interface of the framer is connected to the control interface of the digital signal processor, the control interface of the framer forwards control signaling from the device board to the control interface of the digital signal processor, the clock interface of the framer is connected to the clock interface of the digital signal processor, and the clock interface of the framer forwards clock information from the device board to the clock interface of the digital signal processor.

According to the structure of the optical module in this embodiment, the digital signal processor and the framer are connected through the XSR interface or the VSR interface. In this case, the digital signal processor and the framer do not need to be connected through a connector of a circuit board, thereby effectively reducing a length (for example, a centimeter level) of an electrical connection path between the digital signal processor and the framer, and effectively reducing an insertion loss for a signal transmitted between the digital signal processor and the framer. In addition, because the first optical module directly sends, through the MR interface or the LR interface 1908, a signal on which the processor performs digital signal processing, transmission through the MR interface or the LR interface 1908 effectively reduces an insertion loss for transmitting the signal on which digital signal processing is performed.

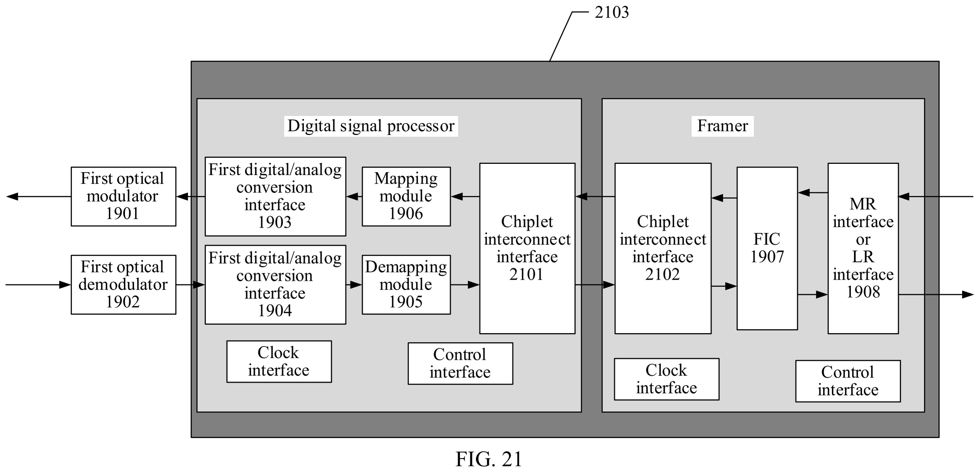

FIG. 21 is an example diagram of a structure of a third embodiment of an optical module according to this application.

The optical module shown in this embodiment includes a first photoelectric converter and a processor that are sequentially connected. The first photoelectric converter specifically includes a first optical modulator 1901 and a first optical demodulator 1902. For specific descriptions, refer to the descriptions corresponding to FIG. 19. Details are not described again. The processor in this embodiment specifically includes a digital signal processor and a framer. The digital signal processor specifically includes a first digital/analog conversion interface 1903 and a mapping module 1906 that are sequentially connected to the first optical modulator 1901. The digital signal processor further includes a first digital/analog conversion interface 1904 and a demapping module 1905 that are sequentially connected to the first optical demodulator 1902. The first optical demodulator 1902 and the mapping module 1906 are separately connected to a chiplet interconnect interface 2101. A type of the chiplet interconnect interface 2101 may be an interface of a universal chiplet interconnect technology (universal chiplet interconnect express, UCIe) or a proprietary interface used for interconnection between chips. For specific descriptions of the first digital/analog conversion interface 1903, the mapping module 1906, the first digital/analog conversion interface 1904, the demapping module 1905, the first optical demodulator 1902, and the mapping module 1906, refer to FIG. 19. Details are not described again. The framer specifically includes a chiplet interconnect interface 2102, and the chiplet interconnect interface 2102 of the framer is connected to the chiplet interconnect interface 2101 of the digital signal processor. The framer further includes a FIC 1907 and an MR interface or an LR interface 1908 that are sequentially connected to the chiplet interconnect interface 2102. For specific descriptions of the FIC 1907 and the MR interface or the LR interface 1908, refer to FIG. 19. Details are not described again.

The digital signal processor and the framer shown in this embodiment are installed on a circuit board of the optical module as a whole. For example, the optical module includes the circuit board and a substrate 2103 mounted on the circuit board. A trace of the substrate 2103 is electrically connected to a trace of the circuit board. The digital signal processor and the framer are installed on the substrate 2103 as a whole, to form a co-package. The co-package includes the substrate 2103, the signal processor, and the framer. The co-package is installed on the circuit board of the optical module as a whole.

The digital signal processor and the framer in this embodiment may include a control interface or a clock interface. For specific descriptions, refer to the descriptions corresponding to FIG. 20. Details are not described again.

According to the structure of the optical module shown in this embodiment, the digital signal processor and the framer are connected through the chiplet interconnect interface. In this way, the chiplet interconnect interface effectively reduces a length (for example, a micrometer level or a millimeter level) of an electrical connection path between the digital signal processor and the framer, thereby effectively reducing an insertion loss for a signal transmitted between the digital signal processor and the framer. In addition, because the first optical module directly sends, through the MR interface or the LR interface 1908, a signal on which the processor performs digital signal processing, transmission through the MR interface or the LR interface 1908 effectively reduces an insertion loss for transmitting the signal on which digital signal processing is performed.

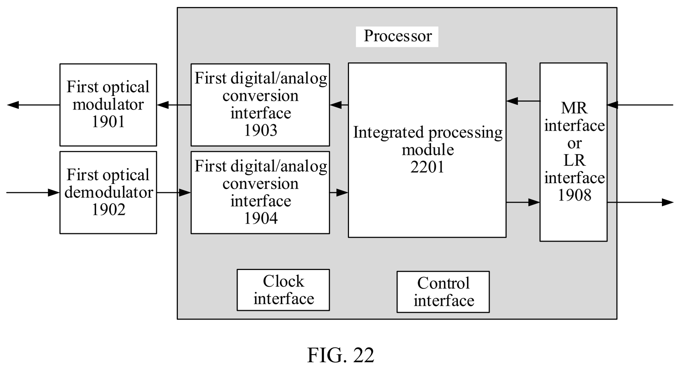

FIG. 22 is an example diagram of a structure of a fourth embodiment of an optical module according to this application.

The optical module shown in this embodiment includes a first photoelectric converter and a processor that are sequentially connected. The first photoelectric converter specifically includes a first optical modulator 1901 and a first optical demodulator 1902. For specific descriptions, refer to the descriptions corresponding to FIG. 19. Details are not described again. The processor shown in this embodiment includes a first digital/analog conversion interface 1903 that is sequentially connected to the first optical modulator 1901, and the processor further includes a first digital/analog conversion interface 1904 that is connected to the first optical demodulator 1902. For descriptions of the first digital/analog conversion interface 1903 and the first digital/analog conversion interface 1904, refer to the descriptions corresponding to FIG. 19. Details are not described again. The processor further includes an integrated processing module 2201 separately connected to the first digital/analog conversion interface 1903 and the first digital/analog conversion interface 1904. The integrated processing module 2201 is further connected to an MR interface or an LR interface 1908. For descriptions of the MR interface or the LR interface 1908, refer to the descriptions corresponding to FIG. 19. Details are not described again. The integrated processing module 2201 shown in this embodiment is configured to integrate a digital signal processor and a framer. Specifically, the integrated processing module 2201 integrates a mapping module, a demapping module, and a FIC. For descriptions of specific functions of the mapping module, the demapping module, and the FIC, refer to the descriptions corresponding to FIG. 19. Details are not described again.

The digital signal processor and the framer in this embodiment may include a control interface or a clock interface. For specific descriptions, refer to the descriptions corresponding to FIG. 20. Details are not described again.

According to the structure of the optical module shown in this embodiment, because the integrated processing module 2201 integrates functions of the digital signal processor and the framer, information exchange between the digital signal processor and the framer does not need to be performed through a physical interface, but is performed through a trace connection of an application-specific integrated circuit (application specific integrated circuit, ASIC) inside the processor, thereby effectively reducing a bit error rate of signal transmission by the integrated processing module 2201. In addition, because the first optical module directly sends, through the MR interface or the LR interface 1908, a signal on which the processor performs digital signal processing, transmission through the MR interface or the LR interface 1908 effectively reduces an insertion loss for transmitting the signal on which digital signal processing is performed.

In any embodiment of FIG. 19 to FIG. 22, the MR interface or the LR interface 1908 of the optical module is directly connected to a switching chip. For specific descriptions, refer to the descriptions corresponding to FIG. 5 or FIG. 10. Details are not described again. In any embodiment in FIG. 19 to FIG. 22, the MR interface or the LR interface 1908 of the optical module may alternatively be directly connected to another optical module. For specific descriptions, refer to the descriptions corresponding to FIG. 8. Details are not described again.

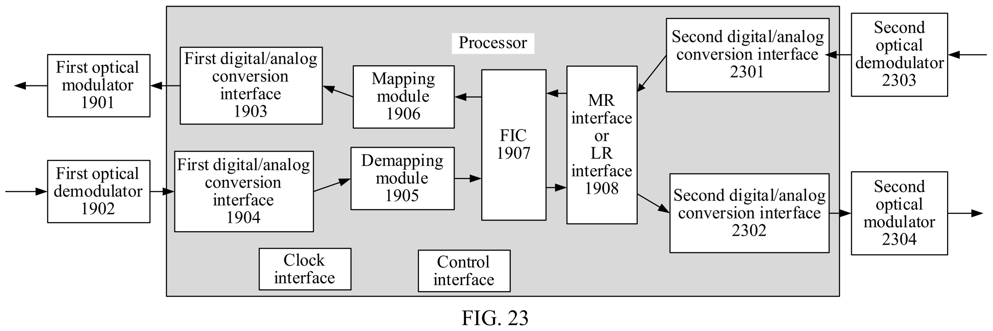

FIG. 23 is an example diagram of a structure of a fifth embodiment of an optical module according to this application.

The optical module shown in this embodiment includes a first photoelectric converter and a processor that are sequentially connected. The first photoelectric converter specifically includes a first optical modulator 1901 and a first optical demodulator 1902. For specific descriptions, refer to the descriptions corresponding to FIG. 19. Details are not described again. The processor shown in this embodiment specifically includes a first digital/analog conversion interface 1903, a mapping module 1906, a first digital/analog conversion interface 1904, a demapping module 1905, an MR interface or an LR interface 1908. For specific descriptions, refer to the descriptions corresponding to FIG. 19. Details are not described again. The processor shown in this embodiment further includes a second digital/analog conversion interface 2301 and a second digital/analog conversion interface 2302 that are sequentially connected to the MR interface or the LR interface 1908. The optical module further includes a second optical demodulator 2303 connected to the second digital/analog conversion interface 2301, and a second optical modulator 2304 connected to the second digital/analog conversion interface 2301. For descriptions of a structure of the processor shown in this embodiment, refer to any embodiment shown in FIG. 19 to FIG. 22. Details are not described again.

The optical module shown in this embodiment may be used in the embodiment corresponding to FIG. 6. If the optical module shown in FIG. 23 is a first optical module, the MR interface or the LR interface 1908 sends a signal on which digital signal processing is performed to the second digital/analog conversion interface 2302, and the second digital/analog conversion interface 2302 performs digital/analog conversion on the signal on which digital signal processing is performed to obtain an analog signal, and sends the analog signal to the second optical modulator 2304. The second optical modulator 2304 is configured to perform electrical-to-optical conversion on the analog signal to emit an optical signal, and the optical signal can be transmitted through an optical cable. For specific descriptions of transmitting the optical signal by the first optical module, refer to the embodiment corresponding to FIG. 6. Details are not described again. If the optical module shown in FIG. 23 is a second optical module, the second optical demodulator 2303 receives an optical signal, and performs optical-to-electrical conversion on the optical signal to obtain an electrical signal. The second digital/analog conversion interface 2301 is configured to perform digital/analog conversion on the electrical signal to obtain an analog signal. The second digital/analog conversion interface 2301 sends the analog signal to the MR interface or the LR interface 1908. The processor performs digital signal processing based on the analog signal to obtain a signal on which digital signal processing is performed, and sends the signal to the first digital/analog conversion interface 1903. The first digital/analog conversion interface 1903 performs digital/analog conversion on the digital signal to obtain an analog signal, and sends the analog signal to the first optical modulator 1901. The first optical modulator 1901 performs electrical-to-optical conversion on the analog signal to emit an optical signal. For specific descriptions of transmitting the optical signal by the second optical module, refer to the embodiment corresponding to FIG. 6. Details are not described again.

For descriptions of the structure of the processor shown in any one of the embodiments in FIG. 19 to FIG. 23, refer to any one of the foregoing embodiments in FIG. 3, FIG. 7, FIG. 13a, FIG. 13b, FIG. 14, FIG. 15, FIG. 17, or FIG. 18. Details are not described again.

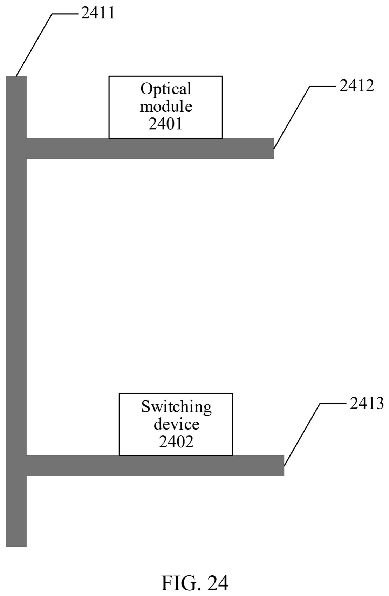

An embodiment of this application further provides a switching device. FIG. 24 is an example diagram of a structure of another embodiment of a switching device according to this application.

The switching device in this embodiment includes a backplane 2411, an optical module 2401 installed on the backplane 2411, and a switching chip 2402. For descriptions of a structure of the optical module 2401, refer to any embodiment shown in FIG. 19 to FIG. 23. An MR interface or an LR interface of the optical module 2401 is connected to the switching chip 2402 through the backplane 2411. Specifically, the optical module 2401 shown in this embodiment is installed on the backplane 2411 through a first device board 2412, the switching chip 2402 is installed on the backplane 2411 through a second device board 2413, and the first device board 2412 and the second device board 2413 are connected through the backplane 2411.

In the embodiment shown in FIG. 2, if the optical module shown in any one of the embodiments in FIG. 19 to FIG. 23 is used as a first optical module, the first optical demodulator 1902 is configured to perform step 201 and step 202. The first digital/analog conversion interface 1904 and the demapping module 1905 are configured to perform step 203. The FIC 1907 is configured to perform step 204. The MR interface or the LR interface 1908 is configured to perform step 205, that is, the MR interface or the LR interface 1908 is configured to send a service cell or a service packet from the FIC 1907 to the switching chip. Specifically, the MR interface or the LR interface 1908 shown in this embodiment is connected to a Serdes interface of the switching chip through a first transmission medium. For descriptions of the first transmission medium, refer to the descriptions corresponding to FIG. 5. Details are not described again. If the optical module shown in any one of the embodiments in FIG. 19 to FIG. 23 is used as a second optical module, the MR interface or the LR interface 1908 is configured to receive a service cell or a service packet from the switching chip, and the switching chip sends the service cell or the service packet to the second optical module, as shown in step 206. Specifically, the MR interface or the LR interface 1908 shown in this embodiment is connected to the Serdes interface of the switching chip through a second transmission medium. The FIC 1907, the mapping module 1906, and the first digital/analog conversion interface 1903 are configured to perform step 207. For descriptions of a process in which the first optical modulator 1901 is configured to perform step 208, and the first optical module and the second optical module perform a service transmission method, refer to the descriptions corresponding to FIG. 2. Details are not described again.

In the embodiment shown in FIG. 9, if the optical module shown in any one of the embodiments in FIG. 19 to FIG. 23 is used as a first optical module, the first optical demodulator 1902 is configured to perform step 901 and step 902. The first digital/analog conversion interface 1904 and the demapping module 1905 are configured to perform step 903. The FIC 1907 is configured to perform step 904. The MR interface or the LR interface 1908 is configured to perform step 905, that is, the MR interface or the LR interface 1908 is configured to send a service cell or a service packet from the FIC 1907 to the switching chip. Specifically, the MR interface or the LR interface 1908 shown in this embodiment is connected to the Serdes interface of the switching chip through the first transmission medium. If the optical module shown in any one of the embodiments in FIG. 19 to FIG. 23 is used as a second optical module, the MR interface or the LR interface 1908 is configured to receive a service cell or a service packet from the switching chip, and the switching chip sends the service cell or the service packet to the second optical module, as shown in step 905. Specifically, the MR interface or the LR interface 1908 shown in this embodiment is connected to the Serdes interface of the switching chip through the second transmission medium. For descriptions of the first transmission medium, refer to the descriptions corresponding to FIG. 5. Details are not described again. The MR interface or the LR interface 1908 sends the service cell or the service packet to the FIC 1907. The FIC 1907, the mapping module 1906, and the first digital/analog conversion interface 1903 are configured to perform step 906. The first optical modulator 1901 is configured to perform step 907. For descriptions of a process in which the first optical module and the second optical module perform the service transmission method, refer to the descriptions corresponding to FIG. 9. Details are not described again.

In the embodiment shown in FIG. 11, if the optical module shown in any one of the embodiments in FIG. 19 to FIG. 23 is used as a first optical module, the first optical demodulator 1902 is configured to perform step 1101 and step 1102. The first digital/analog conversion interface 1904, the demapping module 1905, and the FIC 1907 are configured to perform step 1103. The MR interface or the LR interface 1908 is configured to perform step 1104. If the optical module shown in any one of the embodiments in FIG. 19 to FIG. 23 is used as a second optical module, the MR interface or the LR interface 1908 is configured to receive a service cell or a service packet from the switching chip. The MR interface or the LR interface 1908 sends the service cell or the service packet to the FIC 1907. The FIC 1907, the mapping module 1906, and the first digital/analog conversion interface 1903 are configured to perform step 1106. The first optical modulator 1901 is configured to perform step 1107. For descriptions of a process in which the first optical module and the second optical module perform the service transmission method, refer to the descriptions corresponding to FIG. 11. Details are not described again.

In the embodiment shown in FIG. 16, if the optical module shown in any one of the embodiments in FIG. 19 to FIG. 23 is used as a first optical module, the first optical demodulator 1902 is configured to perform step 1601 and step 1602. The first digital/analog conversion interface 1904 is configured to perform step 1603. The demapping module 1905 is configured to perform step 1604. The processor may further include an FEC decoding module (for specific descriptions, refer to the embodiment corresponding to FIG. 17), and the FEC decoding module is configured to perform step 1605. The FIC 1907 is configured to perform step 1606. The FIC 1907 may further include an FEC encoding module, and the FEC encoding module is configured to perform step 1607 (for specific descriptions, refer to the embodiment corresponding to FIG. 17). The MR interface or the LR interface 1908 is configured to perform step 1608. If the optical module shown in any one of the embodiments in FIG. 19 to FIG. 23 is used as a second optical module, the MR interface or the LR interface 1908 is configured to receive a service cell or a service packet from the switching chip. The MR interface or the LR interface 1908 sends the service cell or the service packet to the FIC 1907. The FIC 1907 further includes an FEC decoding module, and the FEC decoding module is configured to perform step 1610 (for specific descriptions, refer to the embodiment corresponding to FIG. 18). The FIC 1907 is configured to perform step 1611. The processor further includes an FEC encoding module, and the FEC encoding module is configured to perform step 1612 (for specific descriptions, refer to the embodiment corresponding to FIG. 18). The mapping module 1906 is configured to perform step 1613, the first digital/analog conversion interface 1903 is configured to perform step 1614, and the first optical modulator 1901 is configured to perform step 1615. For descriptions of a process in which the first optical module and the second optical module perform the service transmission method, refer to the descriptions corresponding to FIG. 16. Details are not described again.

It may be clearly understood by a person skilled in the art that, for the purpose of convenient and brief descriptions, for a detailed working process of the foregoing system, apparatus, and unit, refer to a corresponding process in the foregoing method embodiments, and Details are not described again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units may be integrated into one unit. The integrated unit may be implemented in a form of hardware, or may be implemented in a form of a software function unit.

## Claims

1. A service transmission method, wherein the method comprises:
receiving, by an optical module, an optical signal, wherein the optical signal carries service data;
converting, by the optical module, the optical signal into an electrical signal;
performing, by the optical module, digital signal processing on the electrical signal to obtain a service cell or a service packet; and
sending, by the optical module, the service cell or the service packet outward.

2. The method according to claim 1, wherein performing, by the optical module, digital signal processing on the electrical signal to obtain the service cell or the service packet comprises:
converting, by the optical module, the electrical signal into a digital signal;
demapping, by the optical module, the digital signal to obtain a demapped signal; and
slicing, by the optical module, the demapped signal to obtain the service cell or the service packet.

3. The method according to claim 2, wherein slicing, by the optical module, the demapped signal to obtain the service cell or the service packet comprises:
slicing, by the optical module, the demapped signal based on a quantity of bytes or a quantity of bits to obtain a plurality of service cells.

4. The method according to claim 2, wherein the demapped signal comprises a plurality of subframes, and slicing, by the optical module, the demapped signal to obtain the service cell or the service packet comprises:
slicing, by the optical module, the demapped signal based on a length of the subframe, to obtain the service packet, wherein the service packet comprises at least one of the subframes.

5. The method according to any one of claims 2 to 4, wherein after slicing, by the optical module, the demapped signal to obtain the service cell or the service packet, the method further comprises:
adding, by the optical module, an overhead to the service cell or the service packet, wherein the overhead carries at least one of the following:
information indicating a target port, operation and maintenance information, switching information, or timing information, wherein the switching information indicates a switching manner of the service cell or the service packet, and the timing information indicates a timing for sending the service cell or the service packet.

6. The method according to any one of claims 1 to 5, wherein sending, by the optical module, the service cell or the service packet outward comprises:
sending, by the optical module, the service cell or the service packet to a switching chip through a first transmission medium.

7. The method according to any one of claims 1 to 5, wherein sending, by the optical module, the service cell or the service packet outward comprises:
sending, by the optical module, the service cell or the service packet to another optical module through a second transmission medium.

8. The method according to any one of claims 1 to 5, wherein sending, by the optical module, the service cell or the service packet outward comprises:
converting, by the optical module, the service cell or the service packet into a transmitted optical signal; and
sending, by the optical module, the transmitted optical signal outward through a first transmission medium or a second transmission medium, wherein the first transmission medium is configured to connect the optical module and a switching chip, and the second transmission medium is configured to connect the optical module and another optical module.

9. The method according to any one of claims 2 to 5, wherein the optical module is a direct detection optical module, and after demapping, by the optical module, the digital signal to obtain the demapped signal, the method further comprises:
performing, by the optical module, forward error correction FEC decoding on the demapped signal to obtain a first decoded signal; and
slicing, by the optical module, the demapped signal to obtain the service cell or the service packet comprises:
slicing, by the optical module, the first decoded signal to obtain the service cell or the service packet.

10. The method according to any one of claims 2 to 5, wherein the optical module is a direct detection optical module or a coherent optical module, and after demapping, by the optical module, the digital signal to obtain the demapped signal, the method further comprises:
performing, by the optical module, FEC decoding on the demapped signal to obtain a first decoded signal;
slicing, by the optical module, the demapped signal to obtain the service cell or the service packet comprises:
slicing, by the optical module, the first decoded signal to obtain the service cell or the service packet;
after slicing, by the optical module, the demapped signal to obtain the service cell or the service packet, the method further comprises:
performing, by the optical module, FEC encoding on the service cell or the service packet to obtain a first encoded signal; and
sending, by the optical module, the service cell or the service packet outward comprises:
sending, by the optical module, the first encoded signal outward.

11. The method according to any one of claims 1 to 10, wherein performing, by the optical module, digital signal processing on the electrical signal to obtain the service cell or the service packet comprises:
performing, by the optical module, digital signal processing on the electrical signal to convert the electrical signal into N first transmission data streams, wherein each first transmission data stream comprises the service cell or the service packet, and N is any integer not less than 1; and
performing, by the optical module, redundancy protection on the N first transmission data streams, to convert the N first transmission data streams into M second transmission data streams, wherein M is any integer greater than N; and
sending, by the optical module, the service cell or the service packet outward comprises:
sending, by the optical module, the M second transmission data streams outward.

12. A service transmission method, wherein the method comprises:
receiving, by an optical module, a service cell or a service packet, wherein the service cell or the service packet is used to carry service data;
performing, by the optical module, digital signal processing on the service cell or the service packet to obtain an electrical signal;
converting, by the optical module, the electrical signal into an optical signal; and
sending, by the optical module, the optical signal outward.

13. The method according to claim 12, wherein performing, by the optical module, digital signal processing on the service cell or the service packet to obtain the electrical signal comprises:
combining, by the optical module, the service cell or the service packet into a service stream based on a timing at which the service cell or the service packet is sent;
mapping, by the optical module, the service stream to obtain a mapped signal; and
converting, by the optical module, the mapped signal into the electrical signal, wherein the electrical signal is an analog signal.

14. The method according to claim 12 or 13, wherein the service cell or the service packet comprises an overhead, and the overhead carries at least one of the following:
information indicating a target port, operation and maintenance information, switching information, or timing information, wherein the switching information indicates a switching manner of the service cell or the service packet, and the timing information indicates the timing at which the service cell or the service packet is sent.

15. The method according to any one of claims 12 to 14, wherein receiving, by the optical module, the service cell or the service packet comprises:
receiving, by the optical module, an optical signal through a first transmission medium or a second transmission medium, wherein the second transmission medium is configured to connect the optical module and another optical module, and the first transmission medium is configured to connect the optical module and a switching chip; and
converting, by the optical module, the optical signal into the service cell or the service packet.

16. The method according to claim 13, wherein the optical module is a direct detection optical module, and after combining, by the optical module, the service cell or the service packet into the service stream based on the timing at which the service cell or the service packet is sent, the method further comprises:
performing, by the optical module, forward error correction FEC encoding on the service stream to obtain a second encoded signal; and
mapping, by the optical module, the service stream to obtain the mapped signal comprises:
mapping, by the optical module, the second encoded signal to obtain the mapped signal.

17. The method according to claim 13, wherein the optical module is a direct detection optical module or a coherent optical module, and combining, by the optical module, the service cell or the service packet into the service stream based on the timing at which the service cell or the service packet is sent comprises:
performing, by the optical module, FEC decoding on the service cell or the service packet to obtain a second decoded signal; and
combining, by the optical module, the second decoded signal into the service stream based on the timing at which the service cell or the service packet is sent.

18. The method according to any one of claims 12 to 17, wherein receiving, by the optical module, the service cell or the service packet comprises:
receiving, by the optical module, Q second transmission data streams, wherein each second transmission data stream comprises the service cell or the service packet, and Q is any integer not less than 1; and
performing, by the optical module, redundancy protection on the Q second transmission data streams to obtain N first transmission data streams, wherein N is any integer not less than 1, and Q is not less than N.

19. An optical module, wherein the optical module comprises a photoelectric converter and a processor that are sequentially connected;
the photoelectric converter is configured to: receive an optical signal, and convert the optical signal into an electrical signal, wherein the optical signal carries service data; and
the processor is configured to: perform digital signal processing on the electrical signal to obtain a service cell or a service packet, and send the service cell or the service packet outward.

20. The optical module according to claim 19, wherein the processor comprises a digital signal processor and a fabric interface controller FIC;
the digital signal processor is configured to: convert the electrical signal into a digital signal, and demap the digital signal to obtain a demapped signal; and
the FIC is configured to slice the demapped signal to obtain the service cell or the service packet.

21. The optical module according to claim 19 or 20, wherein the processor is further configured to: receive a service cell or a service packet, and perform digital signal processing on the service cell or the service packet to obtain an electrical signal, wherein the service cell or the service packet is used to carry service data; and
the photoelectric converter is configured to: convert the electrical signal into an optical signal, and send the optical signal outward.

22. A transmission device, wherein the transmission device comprises a device board and an optical module connected to the device board, and the optical module is described in any one of claims 19 and 20.

23. The transmission device according to claim 22, wherein a processor comprises a control interface, the control interface is connected to the device board, and the control interface is configured to receive control signaling from the device board.
